(19) Europäisches Patentamt
European Patent Office
Office européen des brevets

(11) **EP 1 944 892 A1**

(12) **EUROPEAN PATENT APPLICATION**
published in accordance with Art. 153(4) EPC

(43) Date of publication:
**16.07.2008 Bulletin 2008/29**

(51) Int Cl.:
*H04J 11/00* (2006.01)  *H04B 7/06* (2006.01)
*H04B 7/10* (2006.01)  *H04B 7/26* (2006.01)

(21) Application number: **06822604.2**

(22) Date of filing: **30.10.2006**

(86) International application number:
**PCT/JP2006/321647**

(87) International publication number:
**WO 2007/052602 (10.05.2007 Gazette 2007/19)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **31.10.2005 JP 2005317267**

(71) Applicant: **Sharp Kabushiki Kaisha
Osaka-shi, Osaka 545-8522 (JP)**

(72) Inventors:
• **YAMADA, Ryota
Chiba-ken, (JP)**

• **IMAMURA, Kimihiko
WA 98684, (US)**
• **OKAMOTO, Naoki
Chiba-ken (JP)**

(74) Representative: **Brown, Kenneth Richard et al
R.G.C. Jenkins & Co.
26 Caxton Street
London SW1H 0RJ (GB)**

(54) **RADIO TRANSMITTER AND RADIO TRANSMISSION METHOD**

(57)     The wireless transmitter of the present invention has a transmission circuit control unit that notifies of a transmission diversity notification signal that notifies of the execution of transmission diversity between sectors, and a transmission circuit unit that adds delays that differ for respective n transmission antennas, n being an integer equal to or greater than 2, based on the transmission diversity notification signal.

FIG. 16

**Description**

TECHNICAL FIELD

The present invention relates to a wireless transmitter and a wireless transmission method; in particular, to a wireless transmitter that transmits a signal from a plurality of transmission antennas to a wireless receiver and a wireless transmission method thereof.
Priority is claimed on Japanese Patent Application No. 2005-317267 filed October 31, 2005, the content of which is incorporated herein by reference.

BACKGROUND ART

In recent years, primarily in multicarrier transmission systems, a method has been proposed in which scheduling of users is performed by dividing into multiple blocks in frequency and time domains. Here, the regions which are defined in frequency and time domains and are secured when users perform communications are called allocated slots, and the blocks that form the basis when determining the allocated slots are called chunks.
Amongst these, a method is proposed whereby when transmitting a broadcast/multicast signal or a control signal, blocks which are wide in the frequency domain direction are allocated to obtain a frequency diversity effect, which ensures few errors even with low received power, and when transmitting unicast signals that involve one-on-one communication between a wireless transmitter and a wireless receiver, blocks which are narrow in the frequency domain direction are allocated to obtain a multi-user diversity effect.

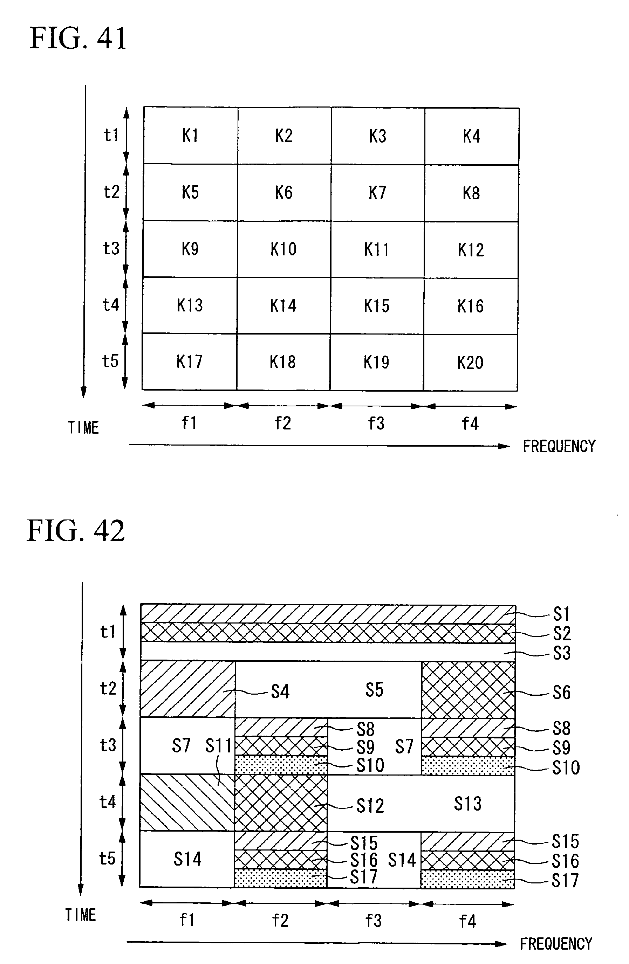

FIG. 41 and FIG. 42 are the diagrams showing the relationship between the time (vertical axis) and the frequency (horizontal axis) for signals transmitted from a wireless transmitter to a wireless receiver. Here, transmission time bands t1 to t5 are established in the time domain. The time width of the transmission time bands t1 to t5 is same.
In addition, transmission frequency bands f1 to f4 are established in the time domain. Each transmission frequency band f1 to f4 has the same frequency bandwidth Fc. In this manner, twenty chunks K1 to K20 are established, as shown in FIG 41, by the transmission time bands t1 to t5 and the transmission frequency bands f1 to f4. A chunk refers to a rectangular region defined by a predetermined frequency band and a predetermined time band in such a plane consisting of a frequency domain and a time domain.
Furthermore, as illustrated in FIG. 42, four chunks K1 to K4 are united in the frequency domain direction, and is divided into three equal parts in the time domain direction, and communication slots S1 to S3, with a time width of t1/3 and a frequency width of 4x f1 are set. An allocation slot S1 is allocated to the first user, an allocation slot S2 is allocated to the second user, and an allocation slot S3 is allocated to the third user. Thereby, the first to the third user can acquire a frequency diversity effect.
Next, a chunk K5 is allocated to the fourth user as an allocation slot S4. Chunks K6 and K7 are united and allocated to the fifth user as an allocation slot S5. A chunk K8 is allocated to the sixth user as an allocation slot S6. Thereby, the fourth to the sixth users can acquire a multi-user diversity effect.
Next, chunks K9 and K11 are allocated to the seventh user as an allocation slot S7. Chunks K10 and K12 are united and is divided into three equal parts in the time domain direction, and communication slots S8 to S 10, with a time width of t3/3 and a frequency width of $2 \times f2$ are set. An allocation slot S8 is allocated to the eighth user, an allocation slot S9 is allocated to the ninth user, and an allocation slot S10 is allocated to the tenth user. Thereby, the seventh to the tenth users can acquire a frequency diversity effect.
Next, a chunk K13 is allocated to the eleventh user as an allocation slot S11. A chunk K14 is allocated to the twelfth user as an allocation slot S12. Chunks K15 and K16 are united and allocated to the thirteenth user as an allocation slot S 13. Thereby, the eleventh to the thirteenth users can acquire a multi-user diversity effect.
Next, chunks K17 and K19 are allocated to the fourteenth user as an allocation slot S 14. Chunks K18 and K20 are united and is divided into three equal parts in the time domain direction, and communication slots S15 to S 17, with a time width of t5/3 and a frequency width of 2 x f2 are set. An allocation slot S 15 is allocated to the fifteenth user, an allocation slot S16 is allocated to the sixteenth user, and an allocation slot S 17 is allocated to the seventeenth user. Thereby, the fourteenth to the seventeenth users can acquire a frequency diversity effect.

[Non-patent document 1] 3GPP contribution, R1-050249
[Non-patent document 2] 3GPP contribution, R1-050590
[Non-patent document 3] 3GPP contribution, R1-050700

DISCLOSURE OF INVENTION

Problem to be Solved by the Invention

However, a method for transmitting a signal from a wireless transmitter to a wireless receiver by combining with transmission diversity had not been considered in order to raise the frequency diversity effect and the multi-user diversity effect even more, and such a method was also unknown in conventional technology.

The present invention was made in view of the aforementioned circumstances, and an object thereof is to provide a wireless transmitter and a wireless transmission method that can acquire a transmission diversity effect efficiently even if it is not possible to change the chunks allocated to a wireless receiver.

Means for Solving the Problem

A wireless transmitter of the present invention has been made to solve the above problem, and has: a transmission circuit control unit that notifies of a transmission diversity notification signal which notifies of the execution of transmission diversity between sectors, and a transmission circuit unit that adds delays that differ for respective n transmission antennas, n being an integer of 2 or greater, based on the transmission diversity notification signal.

In addition, the transmission circuit control unit of the wireless transmitter of the present invention notifies of a frequency diversity/multi-user diversity notification signal that distinguishes whether each chunk is a frequency diversity region or a multi-user diversity region, and the transmission circuit unit adds the delays that differ for the respective n transmission antennas based on at least one of the frequency diversity/multi-user diversity notification signal and the transmission diversity notification signal.

In addition, in the wireless transmitter of the present invention, the n transmission antennas belong to at least j sectors, j being an integer of 2 or greater.

In addition, when the transmission diversity notification signal has been notified, the transmission circuit unit of the wireless transmitter of the present invention sets at least one of delay differences for the n transmission antennas to 1/Fc or greater, Fc being the frequency bandwidth of a chunk.

In addition, the transmission circuit unit of the wireless transmitter of the present invention sets at least one of delay differences for transmission antennas belonging to different sectors among the transmission antennas belonging to the sectors, to 1/Fc or greater.

In addition, the transmission circuit unit of the wireless transmitter of the present invention sets at least one of delay differences for transmission antennas belonging to the same sector in at least one sector among the transmission antennas belonging to the sectors, to 1 /Fc or greater.

In addition, the transmission circuit unit of the wireless transmitter of the present invention sets at least one of delay differences for transmission antennas belonging to the same sector in at least one sector among the transmission antennas belonging to the sectors, to 1/Fc or greater and sets at least one of delay differences for transmission antennas belonging to different sectors, to 1/Fc or greater.

In addition, in the wireless transmitter of the present invention, when performing transmission diversity between sectors for a wireless receiver, in a sector in which at least one of the delay differences for the transmission antennas belonging to the same sector is set to 1/Fc or greater, a transmission signal is transmitted to the wireless receiver before performing transmission diversity between the sectors.

In addition, in the wireless transmitter of the present invention, when performing transmission diversity between sectors for a wireless receiver, in a sector in which at least one of the delay differences for the transmission antennas belonging to the same sector is set to 1/Fc or greater, a transmission signal is not transmitted to the wireless receiver before performing transmission diversity between the sectors.

In addition, a wireless transmitter of the present invention has: a transmission diversity determining unit that chooses the optimum transmission diversity among a plurality of transmission diversities based on reception quality information transmitted from a wireless receiver; and a transmission circuit unit that performs phase control of n transmission antennas, n being an integer of 2 or greater, or adds delays that differ for the n transmission antennas based on the optimum transmission diversity.

In addition, the wireless transmitter of the present invention has a pilot arrangement information generating unit that notifies the transmission circuit unit of pilot arrangement information that is arrangement information of a pilot channel and of at least one transmission diversity among the plurality of transmission diversities, and the transmission circuit unit allocates the pilot channel to a plurality of chunks, performs the phase control for the respective transmission antennas or adds delays that differ for the respective transmission antennas, and transmits the pilot channel, based on the pilot arrangement information and the transmission diversity.

In addition, in the wireless transmitter of the present invention, the plurality of chunks are allocated to at least one of a communication frequency band and a communication time zone.

In addition, in the wireless transmitter of the present invention, the plurality of chunks extend over a plurality of frames.

In addition, in the wireless transmitter of the present invention, the plurality of transmission diversities include: a multi-user diversity that is subjected to a multi-user diversity and phase control; and a multi-user diversity that is subjected to a multi-user diversity, a frequency diversity, and phase control.

In addition, the pilot arrangement information generating unit of the wireless transmitter of the present invention performs allocation of pilot channels for channel estimation, notifies that at least one part of the pilot channels allocated to the plurality of chunks is multi-user diversity regions and that at least one part of the pilot channels is frequency diversity regions using a frequency diversity/multi-user diversity notification signal, and notifies whether phase control is necessary for at least one part of the multi-user diversity regions using a phase control notification signal, and based on the frequency diversity/multi-user diversity notification signal, in the multi-user diversity regions, the transmission circuit unit sets a maximum delay difference among the delays that differ for the respective transmission antennas to 1/Fc or lower and transmits the pilot channel, and in the frequency diversity regions, the transmission circuit unit sets at least one of delay differences that differ for the respective transmission antennas to 1/Fc or greater, performs phase control for the respective transmission antennas based on the phase control notification signal, and transmits the pilot channel.

In addition, the transmission circuit unit of the wireless transmitter of the present invention uses a plurality of orthogonal codes corresponding to the plurality of transmission diversities to give delays that differ for the respective transmission antennas for the respective transmission diversities, and transmits the pilot channel.

In addition, the transmission diversity determining unit of the wireless transmitter of the present invention has a phase control determining unit that compares a reception quality of a chunk with an average reception quality over the plurality of chunks based on reception quality information transmitted from the wireless receiver, and determines whether or not phase control is necessary.

In addition, the transmission diversity determining unit of the wireless transmitter of the present invention has a phase control determining unit that compares a reception quality for when the maximum delay difference among the delays that differ for the respective transmission antennas is set to 1/Fc or lower and the pilot channel is transmitted with a reception quality for when at least one of delay differences that differ for the respective transmission antennas is set to 1/Fc or greater and the pilot channel is transmitted, based on reception quality information transmitted from the wireless receiver, and determines whether or not phase control is necessary.

In addition, the transmission diversity determining unit of the wireless transmitter of the present invention has a phase control determining unit which compares, based on reception quality information transmitted by the wireless receiver, a reception quality for when at least one of delay differences that differ for the respective transmission antennas is set to 1/Fc or greater with: a reception quality for when the maximum delay difference among the delays that differ for the respective transmission antennas is set to 1/Fc or lower and phase control is performed; and a reception quality for when the maximum delay difference among the delays that differ for the respective transmission antennas is set to 1/Fc or lower and phase control is not performed, determines whether or not phase control is necessary, and performs selection on whether to use the frequency diversity or the multi-user diversity.

In addition, the transmission circuit unit of the wireless transmitter of the present invention rotates the phase of at least one of the transmission antennas by π when it has been notified that the phase control is necessary by a phase control notification signal.

In addition, a wireless transmission method of the present invention notifies of a transmission diversity notification signal which notifies of the execution of transmission diversity between sectors, and adds delays that differ for respective n transmission antennas, n being an integer of 2 or greater, based on the transmission diversity notification signal.

Effect of the Invention

In the present invention, a transmission circuit control unit notifies of a transmission diversity notification signal that notifies of the execution of transmission diversity between sectors, and a transmission circuit unit adds delays that differ for respective n transmission antennas, n being an integer of 2 or greater, based on the transmission diversity notification signal.

Thereby, communication quality can be improved by adding delays that differ for the respective transmission antennas, and by transmitting a signal to a wireless receiver by using multi-user diversity or frequency diversity.

BRIEF DESCRIPTION OF THE DRAWINGS

FIG. 1 is a schematic diagram showing that signals transmitted from a wireless transmitter 1 go along a plurality of channels and arrive at a wireless receiver 7.

FIG. 2A is a diagram expressing a delay profile showing a state where transmission signals go along a plurality of channels with different time delays and arrive at a wireless receiver, with respect to time (horizontal axis) and the received power (vertical axis).

FIG. 2B is a diagram expressing a transfer function that shows a frequency conversion for the delay profile in FIG. 2A, and the relationship between the frequency (horizontal axis) and the received power (vertical axis).

FIG. 3A is a diagram expressing a delay profile showing a state where transmission signals go along a plurality of (three) channels with different time delays and arrive at a wireless receiver, with respect to time (horizontal axis) and the received power (vertical axis).

FIG. 3B is a diagram showing the transfer function with the wireless receiver that user u1 uses.

FIG. 3C is a diagram showing the transfer function with the wireless receiver that user u2 uses.

FIG. 4A is a diagram showing the relationship between time and the received power.

FIG. 4B is a diagram showing the relationship between the frequency and the received power.

FIG. 5A is a diagram showing the relationship between time and the received power.

FIG. 5B is a diagram showing the relationship between the frequency and the received power.

FIG. 6A is an illustration for when a plurality of transmission antennas of a wireless transmitter 8 transmit the same signal without giving time delays.

FIG. 6B is a diagram showing the relationship between the frequency and the received power in a wireless receiver 9.

FIG. 6C is a diagram showing the relationship between the frequency and the received power in a wireless receiver 10.

FIG. 7A is an illustration for when a plurality of transmission antennas for the wireless transmitter 8 transmit the same signal by giving different time delays.

FIG. 7B is a diagram showing the relationship between the frequency and the received power in the wireless receiver 9.

FIG. 7C is a diagram showing the relationship between the frequency and the received power in the wireless receiver 10.

FIG. 8 is a diagram showing the signal configuration in a chunk K1.

FIG. 9 is a diagram showing an example of the arrangement of a base station device 11, which is a wireless transmitter, and terminals 12 to 14, which are wireless receivers.

FIG. 10 is a diagram to explain channels observed in the terminal 12 (FIG. 9) and the grouping of chunks.

FIG. 11 is a diagram to explain channels observed in the terminal 14 (FIG. 9) and the grouping of the chunks.

FIG. 12 is a diagram showing another example of the arrangement of the base station device 11, which is a wireless transmitter, and the terminals 12 to 14, which are wireless receivers.

FIG. 13 is a diagram showing the average received power of the terminals 15 and 16 (FIG 12).

FIG. 14 is a diagram to explain the difference between the frequency characteristics when the communication is performed within a sector and the frequency characteristics when the communication is performed between sectors.

FIG. 15 is a table showing an example of the amount of delay when transmission antennas of a sector SC1 and transmission antennas of a sector SC2 are used.

FIG. 16 is a diagram to explain the delay time differences in the sector SC 1 and the sector SC2 in the first embodiment.

FIG. 17 is a block diagram showing an example of the configuration of the base station device in accordance with the first embodiment of the present invention.

FIG. 18 is a block diagram showing the configuration of a transmission circuit unit 22 (FIG. 17) in accordance with the first embodiment of the present invention.

FIG. 19 is a table showing an example of the amount of time delay given to each transmission antenna.

FIG. 20 is a table showing an example of the amount of delay when transmission antennas of the sector SC1 and transmission antennas of the sector SC2 are used.

FIG. 21 is a diagram to explain the time delay differences in the sector SC1 and the sector SC2 in the second embodiment of the present invention.

FIG. 22A is a diagram to explain the difference in frequency characteristics of a terminal located on the sector edge.

FIG. 22B is a diagram to explain the difference in frequency characteristics of a terminal located slightly away from the sector edge.

FIG. 23 is a block diagram showing the configuration of a transmission circuit unit in accordance with the second embodiment of the present invention.

FIG. 24 is a block diagram showing an example of the configuration of a base station device in accordance with the third embodiment of the present invention.

FIG. 25 is a flow chart showing the processing in a phase control determining unit 37 (FIG. 24).

FIG. 26 is a block diagram showing the configuration of a transmission circuit unit in accordance with the third embodiment of the present invention.

FIG. 27 is a table showing an example of the amount of phase rotation given to each transmission antenna when phase control is performed by a phase rotation processing unit 3.

FIG. 28A is a diagram showing a case when signals from two transmission antennas, ant1 and ant2 are transmitted and are received by one reception antenna ant3.

FIG. 28B is a diagram showing a transfer function observed at a terminal, which is a wireless receiver.

FIG. 29 is a diagram to explain a method for measuring an MCS, which is the reception quality, in the third embodiment of the present invention.

FIG. 30 is a table showing an example of MCS information used in the third embodiment of the present invention.

FIG. 31 is a block diagram showing an example of the configuration of a base station device in accordance with the fourth embodiment of the present invention.

FIG. 32 is a flow chart showing the processing in a phase control determining unit 40 (FIG. 31).

FIG. 33 is a diagram to explain a method for measuring an MCS, which is the reception quality, in the fourth embodiment of the present invention.

FIG. 34 is a diagram to explain a method for measuring the multi-user diversity effect or the frequency diversity effect in the fourth embodiment of the present invention.

FIG. 35 is a block diagram showing the configuration of a transmission circuit unit in accordance with the fourth embodiment of the present invention.

FIG. 36 is a diagram to explain the processing of a pilot arranging unit 48a.

FIG. 37 is a block diagram showing an example of the configuration of a base station device in accordance with the fifth embodiment of the present invention.

FIG. 38 is a flow chart showing the processing in a phase control determining unit 41 (FIG. 37).

FIG. 39 is a diagram to explain a method for measuring the multi-user diversity effect or the frequency diversity effect in the fifth embodiment of the present invention.

FIG. 40 is a diagram to explain a measurement method (6).

FIG. 41 is a diagram showing the relationship between time (vertical axis) and frequency (horizontal axis) for the signal transmitted from a wireless transmitter to a wireless receiver.

FIG. 42 is a diagram showing the relationship between time (vertical axis) and frequency (horizontal axis) for the signal transmitted from a wireless transmitter to a wireless receiver.

Reference Symbols

1 wireless transmitter
2, 3, 4 transmission antenna
5, 6 delay device
7 wireless receiver
8 wireless transmitter
9, 10 wireless receiver
11 base station device
12, 13, 14, 15, 16 terminal
17, 18 wireless transmitter
19 wireless receiver
20 reception circuit unit
21 MAC unit
22 transmission circuit unit
23 wireless frequency converting unit
24 error correction encoding unit
25 modulating unit
26, 126 sector/subcarrier allocating unit
27, 34, 134, 38 phase rotation processing unit
28 IFFT unit
29 parallel-serial converting unit
30 GI adding unit
31 filter unit
32 D/A converting unit
33-1, 2, 3, 35-1, 2, 3, 36-1, 2, 3, 39-1, 2, 3 transmission antenna circuit unit
37, 40, 41 phase control determining unit

42, 44, 46 transmission diversity determining unit
43, 45, 47 pilot arrangement information generating unit
48, 48a, 48b pilot arranging unit
49, 51, 53, 55 transmission circuit unit
50, 52, 54, 56 transmission circuit unit
p1, p2 pilot signal generating unit

BEST MODE FOR CARRYING OUT THE INVENTION

(First Embodiment)

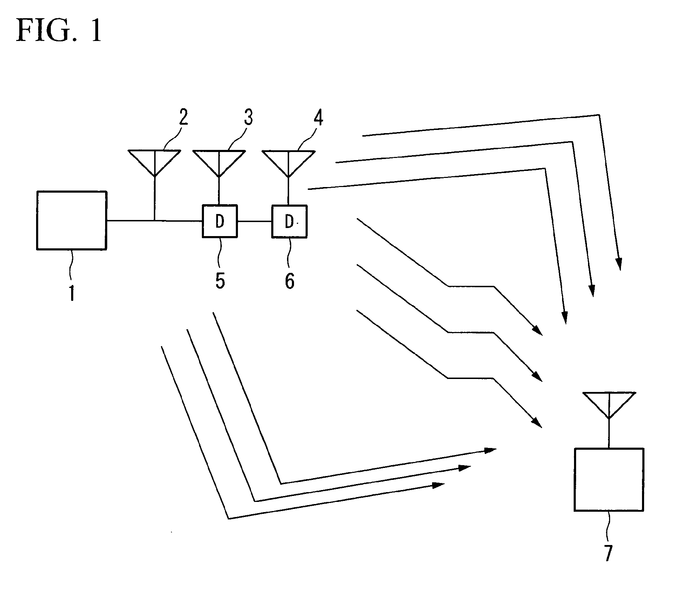

FIG. 1 is a schematic diagram showing that signals transmitted from a wireless transmitter 1 go along a plurality of channels and arrive at a wireless receiver 7. The wireless transmitter 1 has a plurality of transmission antennas 2 to 4, gives the transmission antennas a delay time of 0, T, and 2T, respectively, and transmits through the respective transmission antennas 2 to 4.
The wireless receiver 7 receives the signals transmitted from the wireless transmitter 1. In addition, FIG. 1 explains an example for when the wireless transmitter 1 is equipped with three transmission antennas 2 to 4.
In addition, the plurality of antennas are transmission antennas installed in wireless transmitters, which are base station equipment for mobile telephones or the like. It can be assumed that there are three kinds of transmission antennas; in the same sector, between different sectors in the same base station, and between different base stations. Here, an example will be explained for when transmission antennas have been installed in the same sector.
In addition, delay devices 5 and 6 in FIG. 1 give a delay T to transmission signals, thereby, as mentioned above, a delay T is given to a transmission signal at the transmission antenna 3, and a delay 2T is given to a transmission signal at the transmission antenna 4.

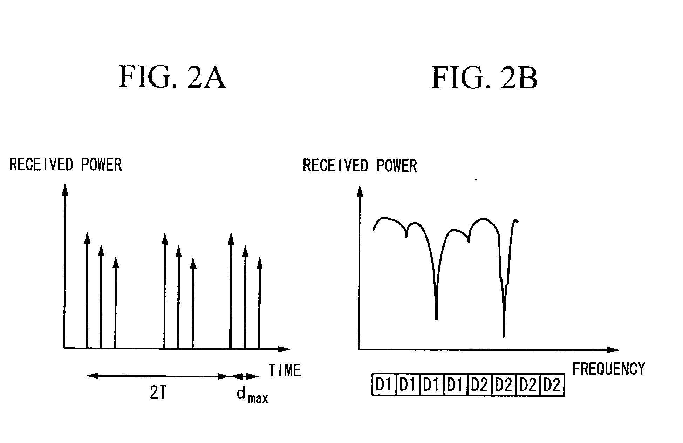

FIG. 2 is a diagram illustrating the delay profile and the transfer functions of signals that go along a plurality of channels (three) with different time delays and arrive at a wireless receiver. FIG. 2A is a delay profile showing a state where transmission signals go along a plurality of channels with different time delays and arrive at the wireless receiver, with respect to time (horizontal axis) and the received power (vertical axis). As illustrated in FIG. 2A, the instantaneous delay profile will have the maximum delay wave of 2T+dmax, and in comparison to when the same signal is transmitted from each transmission antenna; the maximum delay wave becomes extremely large. In addition, the dmax shows the time difference between the fastest arrival channel and the slowest channel when radio waves arrive at the reception antenna from the transmission antennas.

FIG. 2B is a transfer function that shows a frequency conversion for the delay profile in FIG. 2A, and the relationship between the frequency (horizontal axis) and the received power (vertical axis). In this manner, the fact that the maximum delay time difference 2T+dmax becomes greater in a delay profile means that the frequency variation of the transfer function becomes faster. Here, a case is shown where data D1 and D2 are each spread at a spreading factor of four and subcarriers are allocated. The maximum delay time difference is the maximum one among delay time differences between signals transmitted from a plurality of transmission antennas with delays.
In addition, on the wireless transmitter 1 side, it is desirable to control the spreading factor or the coding rate of the error correcting code depending on this frequency variation of the transfer function. However, in the aforementioned method, since the delay 2T is known on the wireless transmitter 1 side, the spreading factor or the coding rate of the error correcting code can be decided without being concerned with the frequency variation of the channel.
On the other hand, when a multi-user diversity effect is desired, it is desirable for the maximum delay time difference 2T+dmax in the instantaneous delay profile not to be too great.

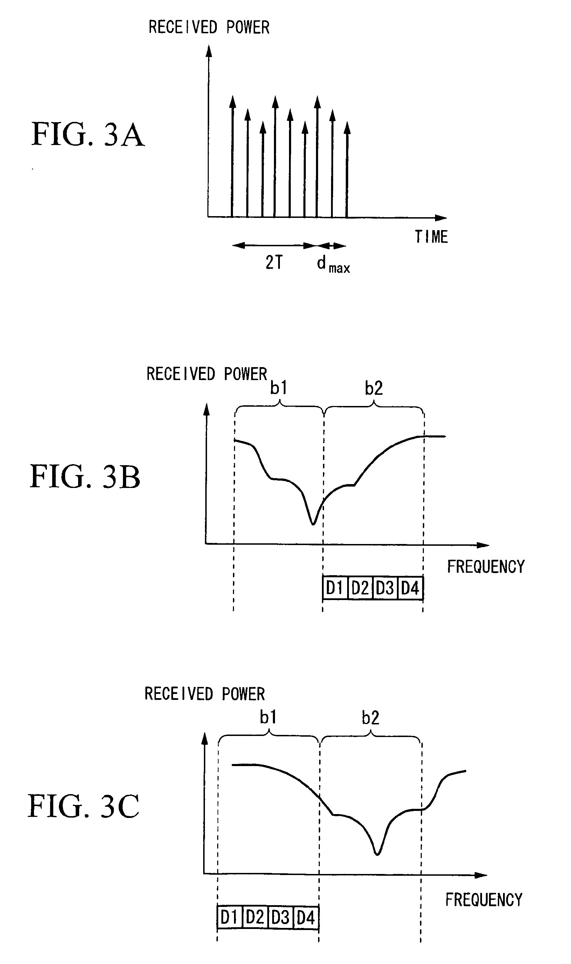

FIG. 3 is a diagram showing the delay profile and the transfer functions of signals which go along a plurality of channels that give different delays and arrive at a wireless receiver.
FIG. 3A expresses a delay profile showing a state where transmission signals go along a plurality of (three) channels with different time delays and arrive at the wireless receiver, with respect to time (horizontal axis) and the received power (vertical axis).
FIG. 3B shows a transfer function in a wireless receiver which a user u1 uses. In addition, FIG. 3C shows a transfer function in a wireless receiver which a user u2 uses.
Since the position of the wireless receiver is different from the user u1 and the user u2, the instantaneous transfer functions are different. In other words, in FIG. 3B and FIG 3C, when a frequency channel b1 is set at a low frequency region and a frequency channel b2 is set at a high frequency region, the frequency channel b2 has better quality for the user u1, and the quality for the frequency channel b 1 for the user u2 improves because there is a frequency with greater received power. Therefore, by the user u1 transmitting data D 1 to D4 at the frequency channel b2, and the user u2 transmitting data D1 to D4 at the frequency channel b1, communication quality can be improved.

In this manner, when instantaneous quality differences for respective frequency channels are used, different users communicating on the respective frequency channels can acquire a multi-user diversity effect that improves transmission efficiency.

However, when the maximum delay time difference 2T+dmax is too great, the frequency variation of the transfer function becomes faster, and the quality difference between the aforementioned frequency channel b1 and frequency channel b2 decreases. Therefore, in order to acquire a sufficient multi-user diversity effect, decreasing the maximum delay time difference 2T+dmax becomes important, as illustrated in FIG. 3A.

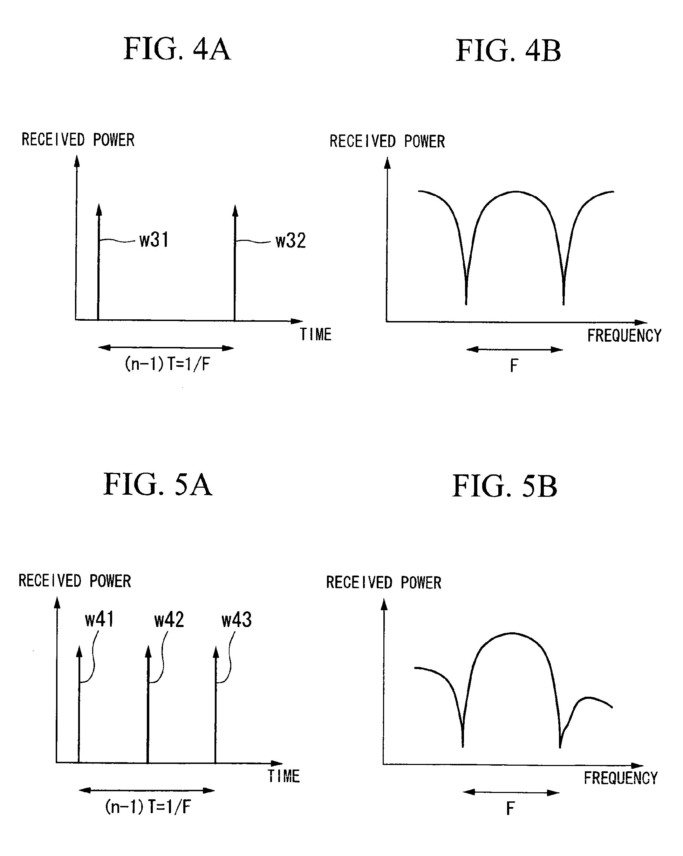

FIG. 4 and FIG. 5 are diagrams showing the relationship between the maximum delay time difference (n-1) T and the frequency variation. As illustrated in FIG. 4A, when the arrival time difference between two arriving waves w31 and w32 is (n-1) T, the transfer function of this channel becomes like that illustrated in FIG. 4B. In other words, the interval at which the amplitude of the received power (vertical axis) declines becomes F=1/(n-1)T.

In addition, as illustrated in FIG. 5A, even when there are a plurality of delay waves w41 to w43, and when the arrival time difference of the arriving wave w41, which arrives first, and the delay wave w43, which arrives the latest, is (n-1) T, as illustrated in FIG. 5B, the frequency interval at which the amplitude of the received power (vertical axis) declines becomes F = 1 / (n-1) T.

Incidentally, as expressed earlier, the frequency variations of appropriate transfer functions are different when a frequency diversity effect is desired and when a multi-user diversity effect is desired.

In other words, when a frequency diversity effect is desired, and when the frequency bandwidth of the chunk, which is a fundamental region defined in the frequency and time domains and is secured when users perform communication, is Fc, by setting a maximum delay time difference (n-1) T between the transmission antennas so as to satisfy (n-1) T > 1/Fc, an environment can be acquired where a frequency diversity effect can be easily acquired.

In contrast, when a multi-user diversity effect is desired, and when the frequency bandwidth of the chunk is Fc, by setting the maximum delay time difference (n-1) T between the transmission antennas so as to satisfy (n-1) T < 1/Fc, an environment can be acquired where a multi-user diversity effect can be easily acquired. In addition, (n-1) T < 1/Fc also includes the case in which (n-1) T =0. In addition, the T in (n-1) T may be constant and may be changed for each transmission antenna.

In addition, when a multi-user diversity effect is desired, the maximum delay time difference may be reduced by reducing the number of the transmission antennas used for signal transmission, instead of setting it so that (n-1) T < 1/Fc.

As explained above, depending on whether a transmission signal should be transmitted by frequency diversity or by multi-user diversity; in other words, whether (n-1) T > 1/Fc or (n-1) T < 1/Fc, a frequency diversity effect and a multi-user diversity effect can be acquired without being affected by the state of the channel.

In addition, whether to transmit by frequency diversity or transmit by multi-user diversity may also be changed in accordance with the type of signal transmitted (such as a pilot signal, a control signal, and/or a broadcast/multicast signal).

In addition, whether to transmit by frequency diversity or transmitting by multi-user diversity may also be changed in accordance with the movement speed of the wireless receiver (when movement speed is fast it is transmitted by frequency diversity and when it is slow it is transmitted by multi-user diversity).

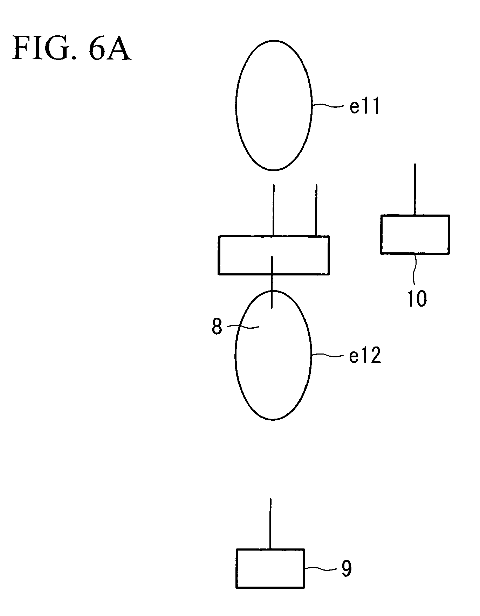

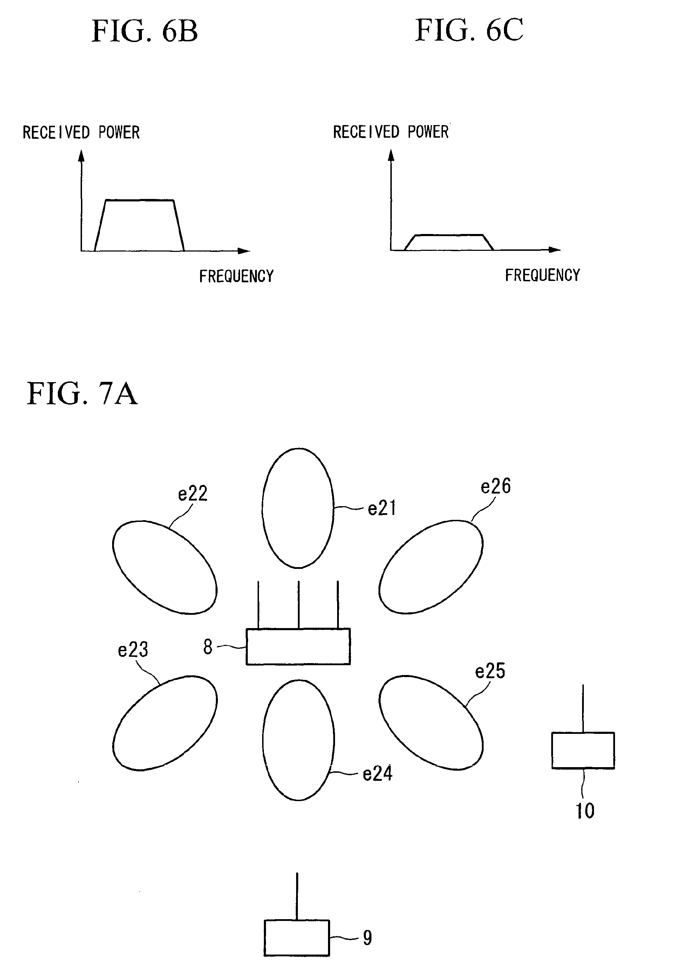

FIG. 6 is an explanatory diagram for when a plurality of transmission antennas of a wireless transmitter 8 transmit the same signal without giving time delays. Here, as illustrated in FIG. 6A, a case will be explained when a wireless transmitter 8 including a plurality of (three) horizontally omnidirectional transmission antennas arranged in parallel is provided. Since the oval-shaped lobes e11 and e12 shown in FIG. 6A are produced, receivers in certain directions such as a wireless receiver 9 are able to receive the reception signal over all frequency bands with a high reception level (refer to FIG. 6B), but receivers in other directions such as a wireless receiver 10 receive the reception signal at a low reception level over all bands (refer to FIG. 6C).

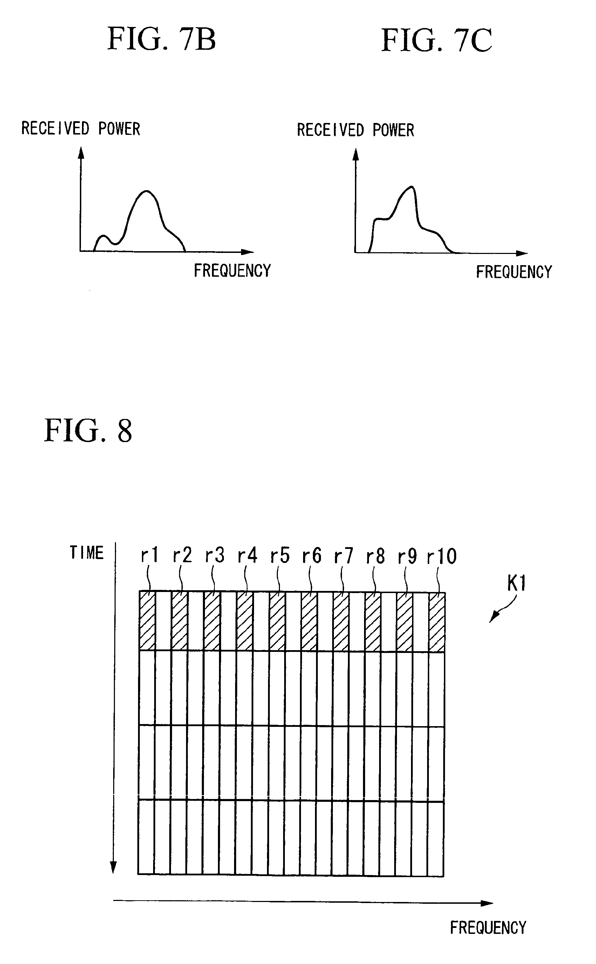

FIG. 7 is an explanatory diagram for when a plurality of transmission antennas of a wireless transmitter 8 transmit the same signal by giving different time delays. Here, as illustrated in FIG. 7A, a case will be explained when the wireless transmitter 8 including a plurality of (three) horizontally omnidirectional transmission antennas arranged in parallel is provided. When considering the case of a narrow band, since the elliptical lobes e21 to e26 shown in FIG. 7A are produced, certain frequency bands in the received signal have high received power and other frequency bands have low received power, but the average received power is fairly constant regardless of direction; thus, similar quality can be approximately acquired in both the received power (refer to FIG. 7B) of the signal at the wireless receiver 9 and the received power (refer to FIG. 7C) of the signal at the wireless receiver 10. Therefore, a method that transmits signals that have been given different delays for the respective transmission antennas of the wireless transmitter 8 can also make up for the defect in cases where the same signal has been transmitted from a plurality of transmission antennas, which was explained in FIG 6.

FIG. 8 is a diagram showing the signal configuration in chunk K1. Here, a case will be explained where the chunk K1 is comprised of 19 subcarriers arranged in the frequency direction (horizontal axis direction) and four OFDM symbols arranged in the time direction (vertical axis). On an OFDM symbol arranged in the region where time is the earliest, common pilot signals (CPICH: Common Pilot Channel) r1 to r10 are arranged for every second subcarrier. The common pilot signals are used to measure a channel estimate and the reception signal quality at the time of demodulation in the wireless receiver.

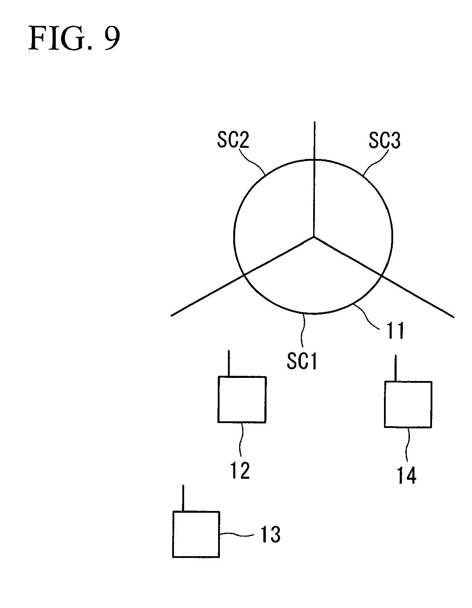

FIG. 9 is a diagram showing an example of the arrangement of a base station device 11, which is a wireless transmitter, and terminals 12 to 14, which are wireless receivers. The terminal 12, the terminal 13, and the terminal 14 are arranged around the base station device 11, and each communicates with the base station 11. The base station device 11 consists of three sectors SC1. to SC3, and includes a plurality of (for example, three) transmission antennas for each sector. One certain sector SC1 and three terminals 12 to 14 are communicated in accordance with the method explained in FIG. 1.

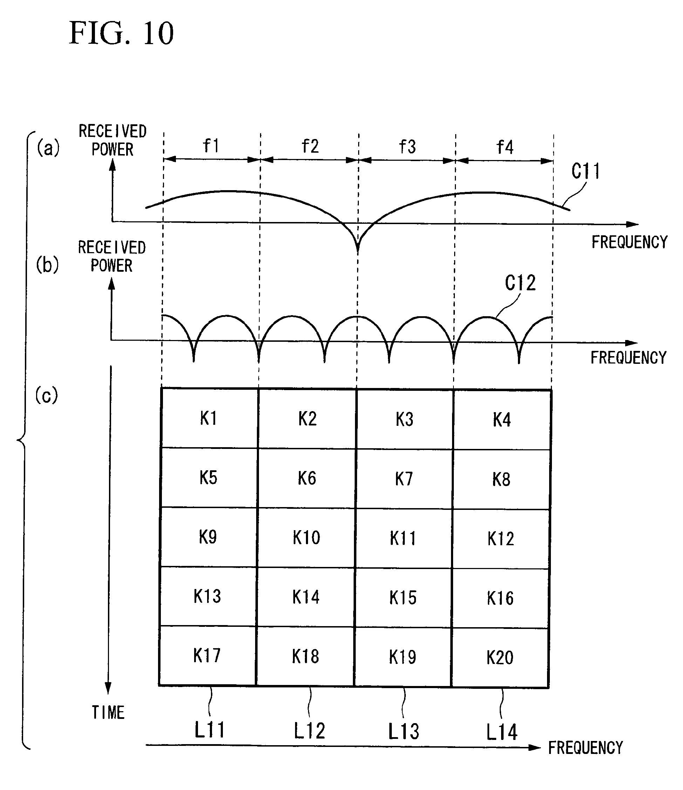

FIG. 10 is a diagram to explain channels observed in the terminal 12 (FIG. 9) and the grouping of the chunks. Graph (a) in FIG 10 shows a transfer function C11 observed in the multi-user diversity region of the signal received by the terminal 12. In addition, graph (b) in FIG 10 shows a transfer function C12 observed in the frequency diversity region of the signal received by the terminal 12. In addition, in graphs (a) and (b) in FIG 10, the horizontal axis shows the frequency and the vertical axis shows the received power. The frequency axis intersects a power axis at a predetermined power value.

In addition, diagram (c) in FIG. 10 shows a method that appropriately allocates chunks K1 to K20 having a predetermined frequency band and a predetermined time band to users to perform communication. The horizontal axis shows frequency, and the vertical axis shows time. In addition, in diagram (c) in FIG. 10, a grouping is performed so as to include: a group L11 consisting of chunks K1, K5, K9, K13, and K17; a group L12 consisting of chunks K2, K6, K 10, K 14, and K 18; a group L 13 consisting of chunks K3, K7, K11, K15, and K19; and a group L14 consisting of chunks K4, K8, K12, K16, and K20. Moreover, the groups L11 and L13 are set beforehand as a multi-user diversity region and the groups L12 and L 14 are set beforehand as a frequency diversity region.

Therefore, at the terminal 12, when a transfer function of the channel has been found by using common pilot signals of the chunks included in the group L11, the frequency band f1 of the transfer function C 11 is observed. In addition, when a transfer function of the channel has been found by using common pilot signals of the chunks included in the group L12, the frequency band f2 of the transfer function C12 is observed. In addition, when a transfer function of the channel has been found by using common pilot signals of the chunks included in the group L13, the frequency band f3 of the transfer function C11 is observed. In addition, when a transfer function of the channel has been found by using common pilot signals of the chunks included in the group L 14, the frequency band f4 of the transfer function C12 is observed.

In addition, the state where the chunks K1 to K20 are divided in the groups L11 to L14 and allocated to a multi-user diversity region (group L11 and L13) and a frequency diversity domain (group L12 and L14), can be fixed at the time of the design of the system and not changed. However, it can be changed dynamically depending on the situation of accommodated terminals (the number of the terminals, the number of terminals that move at a high-speed, and quantity of information transmissions).

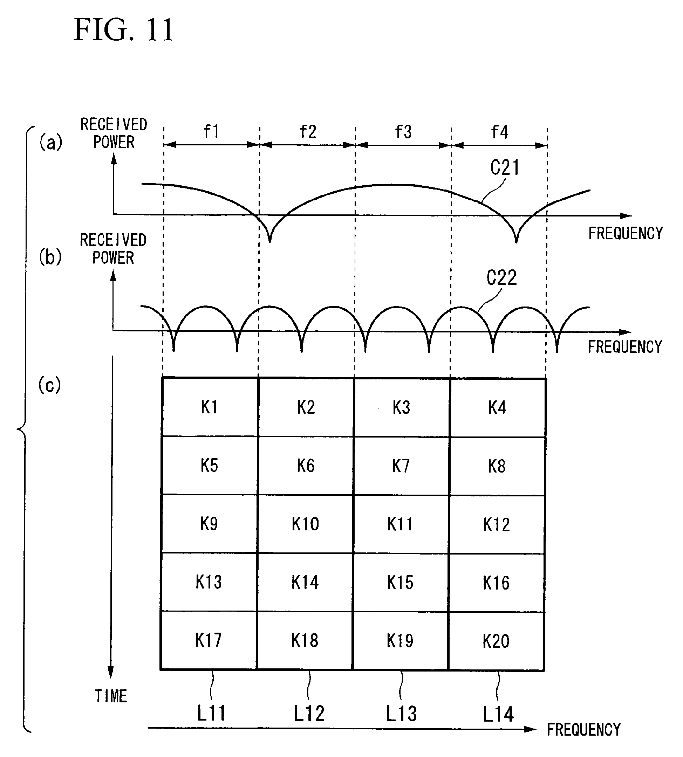

FIG. 11 is a diagram to explain channels observed in the terminal 14 (FIG. 9) and the grouping of the chunks. Graph (a) in FIG. 11 shows a transfer function C21 observed in the multi-user diversity region of the signal received by the terminal 14. In addition, graph (b) in FIG. 11 shows a transfer function C22 observed in the frequency diversity region of the signal received by the terminal 14. In addition, in graphs (a) and (b) in FIG. 11, the horizontal axis shows the frequency and the vertical axis shows the received power.

Since the position for observing the channel is different from that of the terminal 12, which was explained in (a) to (c) in FIG. 10, the transfer functions C21 and C22 are different from the transfer functions C11 and C12.

Since the configurations of the chunk K1 to K20 and the group L11 to L 14 in diagram (c) in FIG. 11 are the same as diagram (c) in FIG. 10, the explanation will be omitted.

In the terminal 14, when a transfer function of the channel has been found by using common pilot signals of the chunks included in the group L11, the frequency band f1 of the transfer function C21 is observed. In addition, when a transfer function of the channel has been found by using common pilot signals of the chunks included in the group L12, the frequency band f2 of the transfer function C22 is observed. In addition, when a transfer function of the channel has been found by using common pilot signals of the chunks included in the group L13, the frequency band f3 of transfer function C21 is observed. In addition, when a transfer function of the channel has been found by using common pilot signals of the chunks included in the group L14, the frequency band f4 of the transfer function C22 is observed.

Therefore, when the quality of the reception signal or the like for each chunk has been transmitted as information to be included in CQI (Channel Quality Indicator) that is notified from the respective terminals 12 to 14 to the base station device 11, in the case of the terminal 12, the base station device 11 compares the group L11 with the group L 13, that is, the frequency band f1 of the transfer function C11 with the frequency band f3 of the transfer function C11 to see which has a good reception signal quality, and as a result, the base station device 11 allocates the group L11 (or frequency band f1) to the terminal 12 and transmits a signal.

Likewise, in the case of the terminal 14, the base station device 11 compares the group L 11 with the group L13, that is, the frequency band f1 of the transfer function C21 with the frequency band f3 of the transfer function C21 to see which has a good reception signal quality, and as a result, the base station device 11 allocates the group L13 (or frequency band f3) to the terminal 14 and transmits a signal.

Thereby, even when different delay times are added to the respective transmission antennas for the respective frequency diversity regions or multi-user diversity regions at the base station device 11, by determining a frequency diversity region or a multi-user diversity region beforehand, by adding different delay times to common pilot signals included in those regions, and by making out the schedule in accordance with CQI information notified from the terminals to the base station device 11, an appropriate chunk is allocated to each terminal and a sufficient multi-user diversity effect can be acquired.

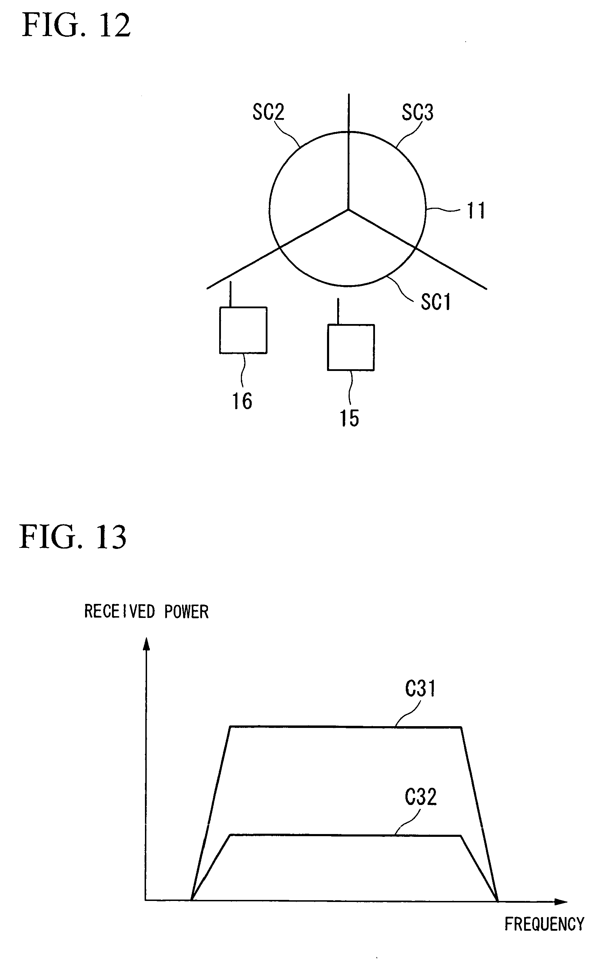

FIG. 12 is a diagram showing an example of the arrangement of the base station device 11, which is a wireless transmitter, and the terminals 12 to 14, which are wireless receivers. A terminal 16 exists in the region in the vicinity of the sector edge that is a border with a sector SC1 and a sector SC2. In addition, a terminal 15 exists in the region in the vicinity of the center of the sector SC 1, which is a region in the vicinity of the middle of the sector edge between the sector S 1 and the sector S2 and the sector edge between the sector SC1 and the sector SC3.
The terminal 15 gives delay time difference(s) for respective transmission antennas in only the same sector SC1 and performs the communication. On the other hand, since the distance from a transmission antenna of the base station device 11 is far away from the terminal 16, the average received power decreases.

FIG. 13 is a diagram showing the average received powers of the terminals 15 and 16 (FIG 12). Since the average received power C31 of the terminal 15 is greater than the average received power C32 of the terminal 16, the reception environment of the terminal 16 is worse than the reception environment of the terminal 15. On this account, not only does the terminal 16 give delay time difference(s) to respective transmission antennas in the sector SC1 of the base station device 11 and performs the communication, but it also transmits the same signal from the sector SC2, gives delay time difference(s) to respective transmission antennas of the sector SC2, and performs the communication, thereby improving the reception environment.
However, when delay time difference(s) are given to the transmission antennas in the sector SC 1 and the communication is performed, by determining a multi-user diversity region or a frequency diversity region beforehand and by making out the schedule in accordance with the CQI information from terminals, the allocation to appropriate chunks is realized. Due to the aforementioned reason, when a certain terminal exists in a sector edge, the terminal in which the average received power is decreased, for example, the terminal 16 in FIG. 12, transmits the same signal from a different sector SC2 in the same base station device 11 with different delay time difference(s). At this time, it is very likely that a chunk has already been allocated to the terminal 16 when the communication is performed with delay time difference(s) added to the transmission antennas in the sector SC 1. Therefore, for example, a situation will be explained where the chunk cannot be changed newly by, for example, making out the schedule when the terminal 16 gives delay time difference (s) for respective transmission antennas in different sectors in the same base station device 11 and performs transmission. In addition, a case will be explained where the same common pilot channels are used in the sectors SC 1 to SC3.
In addition, a case will be explained where the sector SC1 and the sector SC2 give delay time difference(s) for respective transmission antennas between different sectors in the same base station device 11 and perform communication.

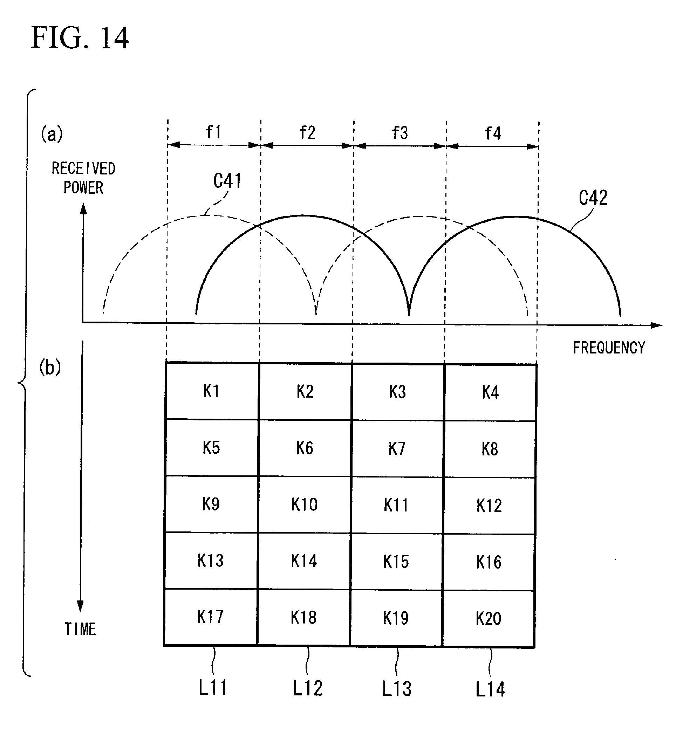

FIG. 14 is a diagram to explain the difference between the frequency characteristics when the communication is performed within a sector and the frequency characteristics when the communication is performed between sectors. Graph (a) in FIG. 14 takes the frequency as the horizontal axis and the received power as the vertical axis, and shows a transfer function C41 which is observed when delay time difference(s) are given in the sector SC1 and a transfer function C42 which is observed when the same signal is also transmitted from the sector SC2 with delay time difference (s) given. Unlike the case in which delay time difference(s) are given for respective transmission antennas in the sector SC 1 and the communication is performed, when delay time difference(s) are also given in the sector SC2 and the communications is performed, the chunk allocation of the terminal cannot be performed.
When a signal is received from the sector SC1; assuming that the group L13 in diagram (b) in FIG. 14 is a multi-user diversity region, the chunks included in the group L13 observe the frequency band f3 of the transfer function C41. In addition, when a terminal demanding the transmission of a signal by multi-user diversity has been allocated to, for example, the chunk K3, the terminal allocated to the chunk K3 can get a multi-user diversity effect.

In this state, when the same signal is transmitted from a different sector in the same base station device with delay time difference(s), a different transfer function is observed by a terminal. For example, if the transfer function C42 has been observed, when delay time difference(s) are given for respective transmission antennas only in the same sector, the chunk K3 is allocated as the optimum chunk, but when a different sector in the same base station device newly transmits with delay time difference(s) given to respective transmission antennas, there is a possibility that the chunk K3 is allocated as a chunk with poor reception quality. By transmitting the same signal from a different sector in the same base station device, the average received power of the chunk K3 is improved, but the multi-user diversity effect cannot be acquired effectively.

Even for the terminal demanding the transmission of a signal by the multi-user diversity, a frequency diversity effect is given as a transmission diversity effect. In other words, when a different sector in the same base station transmits the same signal with delay time difference(s), a maximum delay time difference equal to or greater than a certain constant value 1/Fc is given and transmitted. Then, the reception quality for each chunk is almost equalized (refer to the transfer function C12 in diagram (b) in FIG. 10). On this account, the multi-user diversity effect that should be provided when delay time difference(s) are given for respective transmission antennas in the sector SC1 cannot be provided. However, since the average received power is improved by newly transmitting the same signal from the sector SC2, even if a multi-user diversity effect is not provided, deterioration of the communication quality can be prevented.

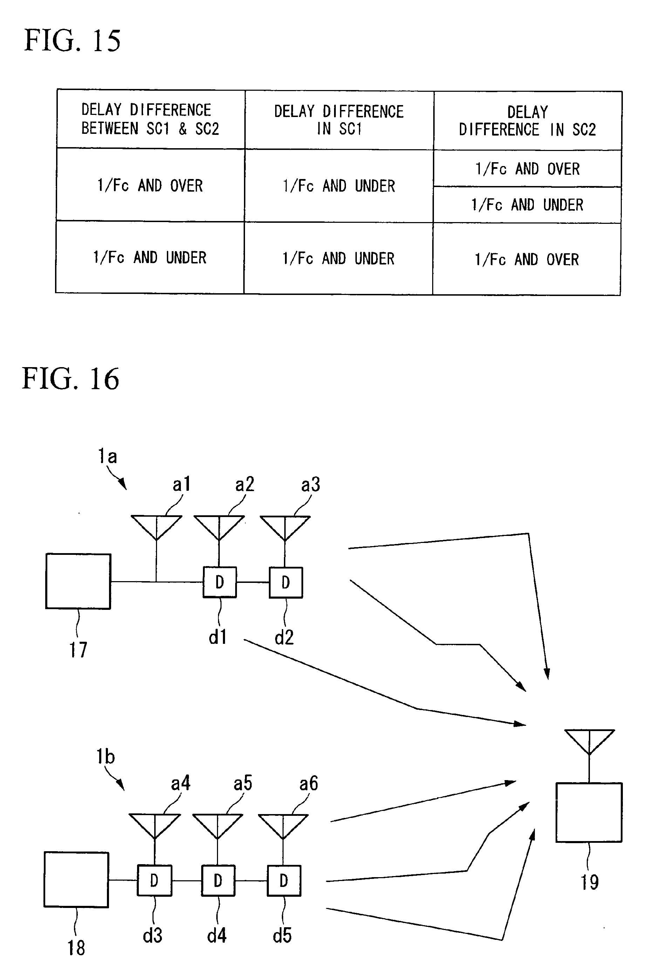

FIG. 15 is a table showing an example of the amount of delay when transmission antennas of the sector SC1 and transmission antennas of the sector SC2 are used. This table shows a pattern that gives delay time difference(s) when a frequency diversity effect is acquired by newly transmitting the same signal from the sector SC2. As a pattern of the added delay time difference, there is a method (1) that adds delay time difference of 1/Fc and over between the sector SC1 and the sector SC2 and a method (2) to provide a frequency diversity effect only by a transmission antenna of the sector SC2 without specifically adding a delay time difference between the sector SC1 and the sector SC2. In addition, for the above (1), there is a method (1-1) that adds a delay time difference of 1/Fc and over in the sector SC2 and a method (1-2) where a delay time difference of 1/Fc and over is added only between the sector SC1 and the sector SC2 and a delay time difference of 1/Fc and under is added in the sector SC2.

In the present embodiment, a case will be explained where a delay time difference of 1/Fc and over is added between the sector SC1 and the sector SC2 and a delay time difference of 1/Fc and over is also added between transmission antennas of the sector SC2.

FIG. 16 is a diagram to explain the delay time difference in the sector SC1 and the sector SC2 in the first embodiment.

A wireless transmitter 1a is a wireless transmitter that transmits a signal to a terminal that exists in the sector SC1, and has a transmission circuit 17, transmission antennas a1 to a3, and delay elements d1 and d2. The delay elements d1 and d2 respectively give the delay time differences of 1 point and 2 points to a transmission signal output from the transmission circuit 17, and the transmission antennas a2 and a3 transmit to a wireless receiver 19. The transmission signal transmitted from the transmission antenna a1 is transmitted to the wireless transmitter without a delay being given. In addition, a wireless transmitter 1b is a wireless transmitter that transmits a signal to a terminal that exists in the sector SC2, and has a transmission circuit 18, transmission antennas a4 to a6, and delay elements d3 to d5. The delay elements d3 to d5 respectively give the delay time differences of 10 points, 15 points, and 20 points to a transmission signal output from the transmission circuit 18, and the transmission antennas a4 to a6 transmit to the wireless receiver 19. Here, the point that is used as the delay time difference unit shows the number of the FFT (Fast Fourier Transform) points.

The relations between the delay time difference and 1/Fc are decided as follows. That is, 2 points of the delay time difference are set to become smaller than 1/Fc. In addition, 10 points of the delay time difference are set to become smaller than 1/Fc. Since the transmission circuit 17 is operated with a comparatively small maximum delay time difference as illustrated in FIG. 3A in accordance with the scheduling done beforehand, for a transmission diversity suitable for the multi-user diversity region, the maximum delay time difference for the sector SC1 is set to 2 points. On the other hand, the sector SC2 is operated so as to receive an inter sector diversity notification signal and acquire a frequency diversity effect (refer to FIG. 2A), the maximum delay time difference between different sectors in the same base station device is set to 20 points.

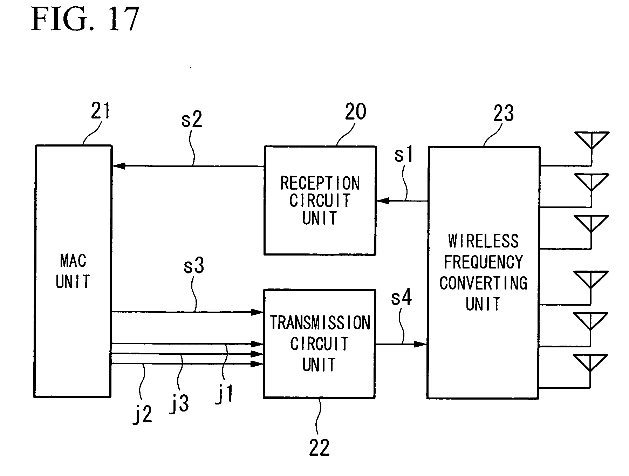

FIG. 17 is a block diagram showing an example of the configuration of the base station device in accordance with the first embodiment of the present invention. A wireless frequency converting unit 23 of the base station device, which is a wireless transmitter, outputs a signal s1 which is transmitted from a terminal, which is a wireless receiver, and is received by a receiving antenna, to a reception circuit unit 20. The reception circuit unit 20 generates a signal s2 by a receiving process for the signals s1 output from the wireless frequency converting unit 23, and outputs the signal s2 to a MAC (Media Access Control) unit 21. The MAC unit 21 outputs: an inter sector diversity notification signal j 1 which is notified when the transmission diversity is performed between sectors; a frequency diversity/multi-user diversity notification signal j2; and a sector/subcarrier allocation information j3, to a transmission circuit unit 22. In addition, the MAC unit 21 outputs a signal s3 that includes data to be transmitted to a terminal to the transmission circuit unit 22. The transmission circuit unit 22 is controlled based on the signal j1 to j3 output from the MAC unit 21.

The MAC unit 21 (transmission circuit control unit) notifies the transmission circuit unit 22 of the inter sector diversity notification signal j1 (transmission diversity notification signal) to notify that transmission diversity (frequency diversity or frequency diversity) is performed between sectors.

The transmission circuit unit 22 generates a signal s4 by adding different delays to respective n, n being an integer equal to or greater than 2, transmission antenna, based on the inter sector diversity notification signal j 1. The wireless frequency converting unit 23 transmits the signal s4 output from the transmission circuit unit 22 via a transmission antenna to the terminal, which is a wireless receiver.

In addition, the MAC unit 21 (transmission circuit control unit) notifies of the frequency diversity/multi-user diversity notification signal j2 to distinguish a frequency diversity region that is a region that communicates by using frequency diversity from a multi-user diversity region that is a region that communicates by using multi-user diversity.

The transmission circuit unit 22 adds different delays to respective n transmission antennas based on at least one of the frequency diversity/multi-user diversity notification signal j2 and the inter sector diversity notification signal j1.

A plurality of transmission antennas provided in a wireless transmitter may transmit transmission signals to different sectors. In other words, the n transmission antennas may belong to at least j sectors, j being an integer equal to or greater than 2.

For example, when the inter sector diversity notification signal j 1 (transmission diversity notification signal) has been notified from the MAC unit 21, the transmission circuit unit 22 (transmission circuit unit) sets the maximum of the delay for the respective n transmission antennas to 1/Fc (Fc is the frequency bandwidth of the chunk) or greater. In addition, the transmission circuit unit 22 may set the maximum of the delay for the respective transmission antennas belonging to different sectors among transmission antennas belonging to sectors, to 1/Fc or greater.

In addition, the transmission circuit unit 22 may set the maximum of the delay for the respective transmission antennas belonging to the same sector in at least one sector among transmission antennas belonging to sectors, to 1/Fc or greater.

In addition, the transmission circuit unit 22 may set the maximum of the delay for the respective transmission antennas belonging to the same sector in at least one sector among transmission antennas belonging to sectors, to 1/Fc or greater, and it may set the maximum of the delay for the respective transmission antennas belonging to different sectors, to 1/Fc or greater.

In this manner, by setting the maximum of the delay by the transmission circuit unit 22, since the delay times between transmission signals transmitted from a plurality of antennas increase, a frequency diversity effect can be acquired between a base station device and the terminal. Therefore, communication quality can be improved.

In addition, when transmission diversity is performed between sectors from a base station device, which is a wireless transmitter, to a terminal, which is a wireless receiver, in the sector where the maximum of the delay for each transmission antenna belonging to the same sector has been set to 1/Fc, the transmission circuit unit 22 may or may not transmit a transmission signal to the terminal, which is a wireless receiver, before performing transmission diversity between sectors.

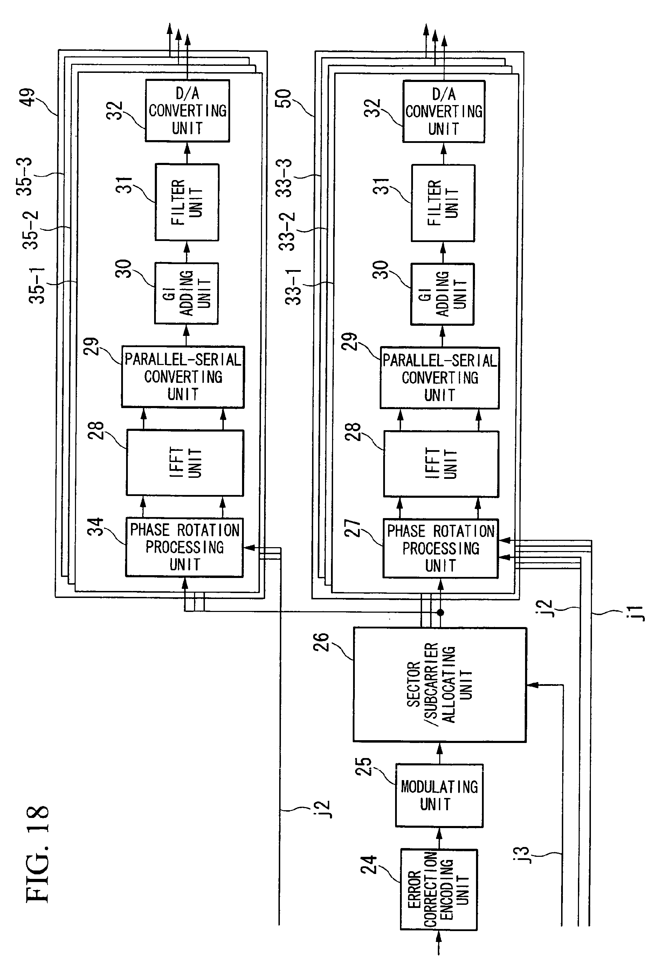

FIG. 18 is a block diagram showing the configuration of the transmission circuit unit 22 (FIG. 17) in accordance with the first embodiment of the present invention. The transmission circuit unit 22 has an error correction code encoding unit 24 that performs error correction encoding for transmission data. In addition, it has a modulating unit 25 that performs modulation processing, such as QPSK (Quadrature Phase Shift Keying), and 16 QAM (Quadrature Amplitude Modulation) for the output of the error correction code encoding unit 24. In addition, it has a subcarrier allocating unit 26, which allocates a sector and a terminal to a subcarrier based on sector/subcarrier allocation information. The output of the subcarrier allocating unit 26 is input into transmission circuit units 49 and 50. The transmission circuit units 49 and 50 respectively transmit transmission signals for the sectors SC1 and SC2.

The transmission circuit units 49 and 50 consist of transmission antenna circuit units 35-1 to 35-3 and 33-1 to 33-3, respectively. Each of the transmission antenna circuit units 35-1 to 35-3 and 33-1 to 33-3 generates signals transmitted by separate transmission antennas. Here, the sector/subcarrier allocation information is determined beforehand when delay time difference(s) are given to the transmission antennas in the sector SC 1 and the communication is performed, and here it is the information that cannot be changed.

In addition, the frequency diversity/multi-user diversity notification signal is determined in accordance with whether each terminal gets a frequency diversity effect or whether it gets a multi-user diversity effect when delay time difference(s) are added between the transmission antennas in the sector beforehand and the communication is performed.

Because the multi-user diversity effect determined in the sector SC 1 is taken into consideration, the phase rotation processing unit 34 in the transmission circuit unit 49 sets the maximum delay time difference between the transmission antennas to 1/Fc or lower. On the other hand, in the transmission circuit 50, the phase rotation processing unit 27 usually controls whether a delay time difference of 1/Fc or greater is given or whether a delay time difference of 1/Fc or lower is given in accordance with the frequency diversity/multi-user diversity notification signal, but when the inter sector diversity notification signal has been notified, the phase rotation processing unit 27 of the transmission circuit 50 sets the maximum delay time difference between the transmission antennas to 1/Fc or greater for the chunk to which the terminal that has received the notification signal is allocated.

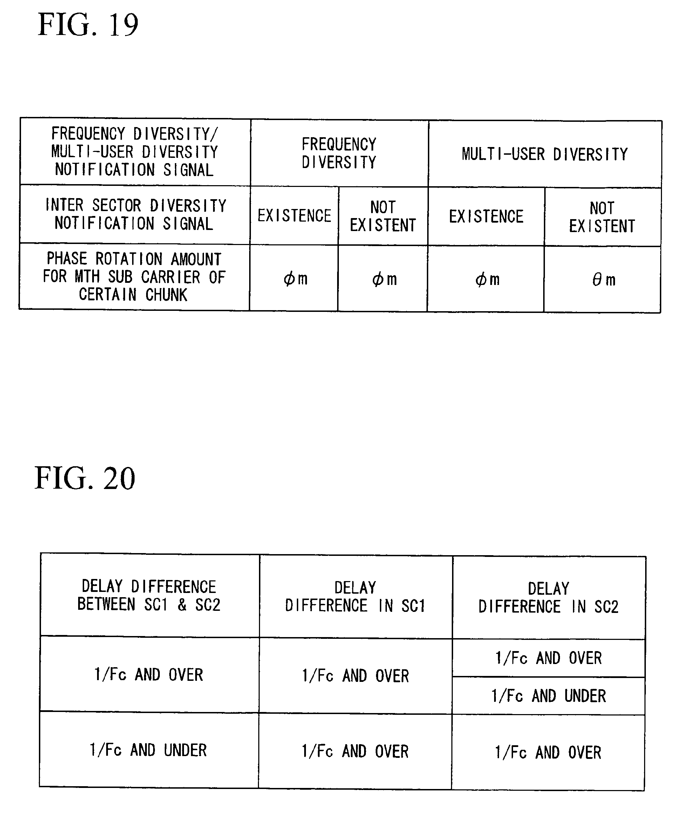

FIG. 19 is a table showing an example of the amount of time delay given to each transmission antenna. This table shows the frequency diversity/multi-user diversity notification signal and the control method of the phase rotation amount by the inter sector diversity notification signal. φm and θm in the table are each expressed by the following formulas (1) and (2).

$$\varphi m = 2\pi \times (d\_freq) \times m/N \ldots (1)$$

$$\theta m = 2\pi \times (d\_usr) \times m/N \ldots (2)$$

Here, φm is the phase rotation amount for the mth subcarrier of a certain chunk corresponding to the frequency diversity, and (d_freq) is the delay point equal to or greater than 1/Fc.

In addition, θm is the phase rotation amount for the mth subcarrier of a certain chunk corresponding to the multi-user diversity, and the (d_usr) is the delay point equal to or less than 1/Fc.

In addition, N shows the number of the FFT points. Usually, when frequency diversity is notified by the frequency diversity/multi-user diversity notification signal, as illustrated in the table in FIG. 19, the phase rotation amount becomes φm. On the other hand, when multi-user diversity is notified, the phase rotation amount becomes θm. Furthermore, the phase rotation amount may be changed by the inter sector diversity notification signal.

When frequency diversity has been notified by the frequency diversity/multi-user diversity notification signal, the phase rotation amount stays at φm. On the other hand, when multi-user diversity is notified and notification has been received that transmission diversity is performed between sectors, the phase rotation amount becomes φm.

Returning to FIG. 18, both in the transmission circuit units 49 and 50, IFFT units 28 respectively convert the outputs of phase rotation processing units 34 and 27 into time signals. Parallel-serial converting units 29 perform parallel-serial conversion for the output of the IFFT units 28. Afterwards, GI (Guard Interval) adding units 30 add a guard interval. Then, filter units 31 extract a signal with a desired bandwidth from the outputs of the GI adding units 30. Subsequently, D/A (Digital/Analog) converting units 32 perform digital/analog conversion for the outputs of the filter units 31. The wireless frequency converting unit 23 (FIG. 17) converts the outputs of the D/A converting unit 32 into a wireless frequency, which is transmitted through respective transmission antennas.

(Second Embodiment)

In the first embodiment, a case where an inter sector diversity notification signal has been notified to only the sector SC2 was explained. However, it is desirable that the maximum delay time difference be set to 1/Fc or greater even in the sector SC1 in order to use a frequency diversity effect more effectively. Therefore, in the present embodiment, an inter sector diversity notification signal is also notified to the sector SC1, as well as the sector SC2, and even in the sector SC 1, the maximum delay time difference between the transmission antennas is set to 1/Fc or greater and the transmission is performed.

FIG. 20 is a table showing an example of the amount of delay when transmission antennas of the sector SC1 and transmission antennas of the sector SC2 are used. In contrast to the amount of the delay explained in the first embodiment (FIG. 15), even in the sector SC1, a maximum delay time difference of 1/Fc and over is added between transmission antennas and the transmission is performed. How to add the delay time difference is explained as follows. As a pattern of the added delay time difference, there is a method (3) that adds a delay time difference of 1/Fc and over between the sector SC1 and the sector SC2 and a method (4) that adds a delay time difference of 1/Fc and over between transmission antennas of the sector SC1 and the sector SC2 without adding a specific delay time difference between the sector SC1 and the sector SC2.

In addition, for the above (3), there is a method (3-1) that adds a delay time difference of 1/Fc and over between transmission antennas in the sector SC1 and the sector SC2 and a method (3-2) that adds a delay time difference of 1/Fc and over between transmission antennas in the sector SC1 and adds a delay time difference of 1/Fc and under in the sector SC2.

In contrast to the delay time difference added in the first embodiment, in the present embodiment, the maximum delay time difference of 1/Fc and over is added between transmission antennas of the sector SC 1. In other words, a delay time difference of 1/Fc and over is added between the sector SC1 and the sector SC2, and a delay time difference of 1/Fc and over is added between transmission antennas of the sector SC1 and between transmission antennas of the sector SC2.

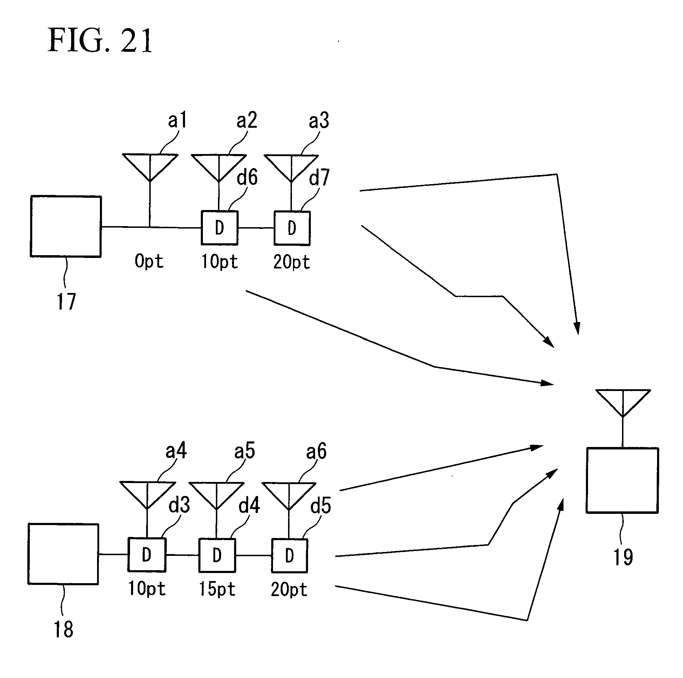

FIG. 21 is a diagram to explain the delay time difference in the sector SC1 and the sector SC2 in the second embodiment. Portions with identical configurations in the first embodiment (FIG 16) are referred to by using the same reference symbols, and explanations will be omitted. The present embodiment differs from the first embodiment in that a delay time difference of 1/Fc or greater is added between transmission antennas in the sector SC 1.

Delay elements d6 and d7 respectively give delay time differences of 10 points and 20 points to a transmission signal output from the transmission circuit 17.

In FIG. 21, the delay time difference between adjacent transmission antennas in the sector SC1 is different from the delay time difference between adjacent transmission antennas in the sector SC2. That is, the delay time difference between the delay elements d6 and d7 is 10 points, and the delay time difference between the delay elements d4 and d5 is 5 points. In addition, a delay time difference between adjacent transmission antennas may be set to another setting provided that a maximum delay time difference between the transmission antennas is 1/Fc or greater.

The first advantage for adding a maximum delay time difference of 1/Fc or greater even between transmission antennas of the sector SC 1 and performing transmission is that a frequency diversity effect can be acquired effectively. In addition, a delay time difference of 1/Fc or greater may be added between all of the transmission antennas, and transfer functions corresponding to all transmission antennas may be averaged in the allocated chunk. However, when such a large delay time difference is given, since the frequency variation becomes too intense, channel estimate precision and the other processes using pilot signals may be affected. Therefore, in the present embodiment, a maximum delay time difference of 1/Fc or greater is given not only to the transmission antennas of the sector SC2, but also to the transmission antennas of the sector SC 1 and the transmission is performed so that as many transfer functions as possible are averaged within the frequency band of one chunk.

In addition, as the second advantage, when a frequency diversity effect is desired in the sector SC 1 as well, a frequency diversity effect can be acquired immediately when the base station device has decided to perform transmission diversity between sectors. When there is a terminal on a sector edge, a frequency diversity effect is immediately provided even in the first embodiment. However, when the terminal is located slightly away from the sector edge, a sufficient frequency diversity effect is unable to be acquired in the first embodiment because the received power from the sector SC2 is weak, and even though frequency characteristics change during that time, a multi-user diversity effect, not a frequency diversity effect, is acquired in the sector SC 1.

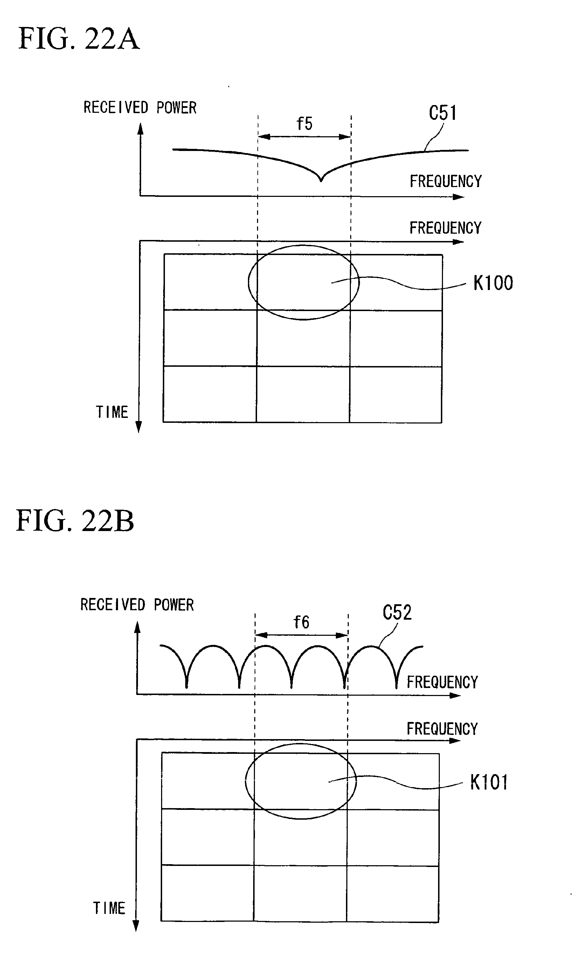

FIG. 22A and FIG. 22B are diagrams that explain the difference in frequency characteristics of a terminal located on the sector edge and a terminal located slightly away from the sector edge.

The reception characteristics of the terminal located on the sector edge is as shown in diagram (a) in FIG. 22A, and a chunk K100 shown in (b) in FIG. 22A is allocated to this terminal. This terminal can receive a transfer function C51 of the frequency band f5 and acquire some multi-user diversity effect, but since the frequency characteristics change due to a transmission signal from the sector SC2, the communication will be performed without the optimum multi-user diversity being acquired.

In addition, the reception characteristics of the terminal located slightly away from the sector edge is as shown in diagram (c) in FIG. 22B, and a chunk K101 shown in diagram (d) in FIG. 22B is allocated to this terminal. This terminal receives a transfer function C52 of the frequency band f6. By adding a maximum delay time difference of 1/Fc or greater between transmission antennas even in the sector SC1 and performing the communication, if a frequency diversity effect is acquired, it is possible to avoid the situation in which the communication is performed where the optimum multi-user diversity is not acquired.

The configuration of the base station device is the same as that of the base station (FIG. 17) in accordance with the first embodiment, and the transmission circuit unit 22 is controlled by the frequency diversity/multi-user diversity notification signal and the inter sector diversity notification signal output from the MAC unit 21.

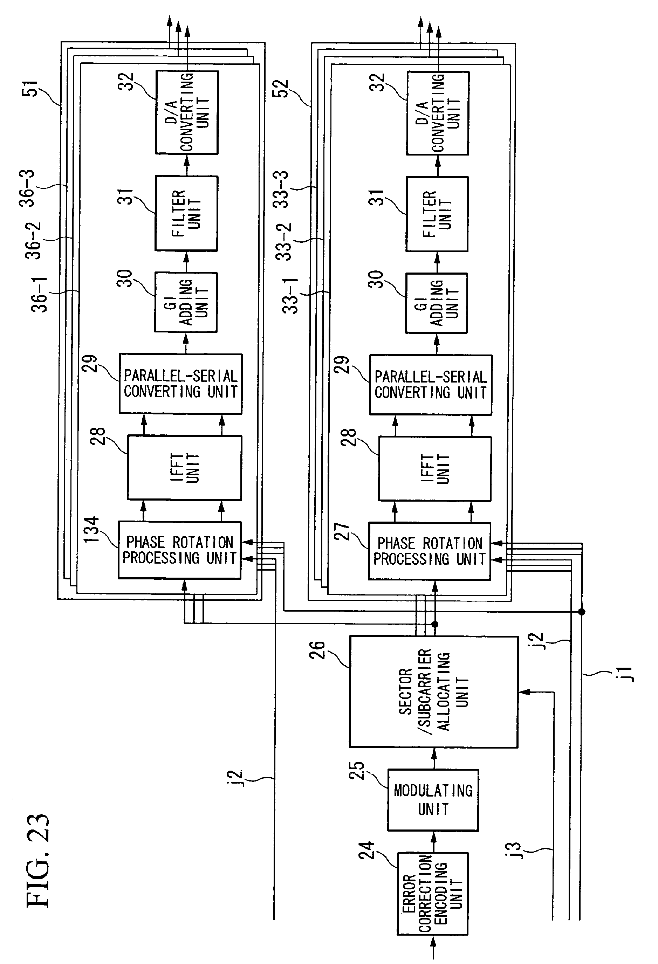

FIG. 23 is a block diagram showing the configuration of a transmission circuit unit in accordance with the second embodiment of the present invention.

The transmission circuit unit in accordance with the present embodiment is different from that of the first embodiment in that an inter sector diversity notification signal j1 is notified not only to a transmission circuit unit 52, but also to a transmission circuit unit 51. Processing in the transmission circuit unit 52 in FIG. 23 is similar to the transmission circuit 50 (FIG. 17) in the first embodiment. In the transmission circuit unit 51 in FIG. 23, a phase rotation processing unit 134 usually performs control whether to add a delay time difference of a frequency diversity 1/Fc or greater or to add a delay time difference of 1/Fc or lower in accordance with the frequency diversity/multi-user diversity notification signal j2. Furthermore, upon the notification of the inter sector diversity notification signal j1, even in the phase rotation processing unit 134 of the transmission circuit unit 51, the maximum delay time difference between the transmission antennas is set to 1/Fc or greater in consideration of the frequency diversity effect for the chunk to which the terminal which has received the notification signal is allocated. Processing of the phase rotation processing unit 134 based on the inter sector diversity notification signal j 1 is different from the first embodiment. The phase rotation control by the frequency diversity/multi-user diversity notification signal j2 and the inter sector diversity notification signal j1 is performed based on FIG. 19 as illustrated in the first embodiment. In the same manner as the transmission circuit unit 52, the output of the phase rotation processing unit 134 is handled by the IFFT unit 28, the parallel-serial converting unit 29, the GI adding unit 30, the filter unit 31, and the D/A converting unit 32.

(Third Embodiment)

In the first embodiment and the second embodiment, cases were explained that avoid characteristics variation depending on the respective chunks by acquiring a frequency diversity effect as a transmission diversity even for terminals that demand a multi-user diversity by always adding a maximum delay time difference of a constant value of 1/Fc or greater between transmission antennas and performing transmission. In the present embodiment, a method for acquiring a multi-user diversity effect as a transmission diversity effect will be explained.

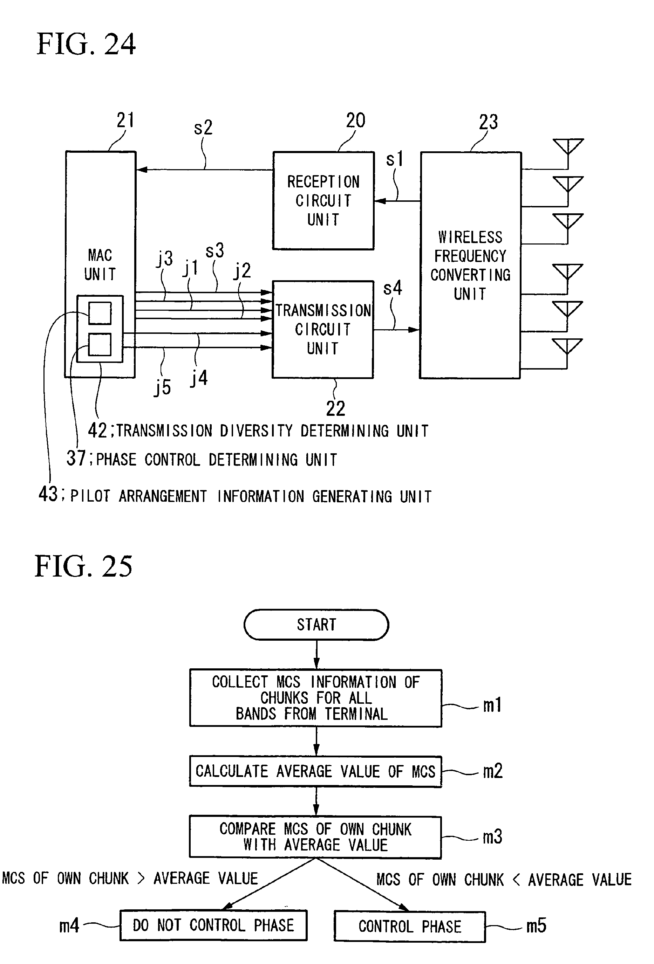

FIG. 24 is a block diagram showing an example of the configuration of a base station device in accordance with the third embodiment of the present invention, and the basic configuration thereof is the same as FIG. 17. A transmission circuit unit 22 is controlled by a sector/subcarrier allocation information j3, an inter sector diversity notification signal j1, a frequency diversity/multi-user diversity notification signal j2, a phase control notification signal j4, and pilot arrangement information j 5 that are the outputs from a MAC unit 21. Of these, the phase control notification signal j4 and the pilot arrangement information j5 are output from a transmission diversity determining unit 42 of the MAC unit 21. The transmission diversity determining unit 42 consists of a phase control determining unit 37 and a pilot signal arrangement information generating unit 43.
The pilot signal arrangement information generating unit 43 outputs the pilot arrangement information j5, which is arrangement information of common pilot signals, and the phase control notification signal j4 related to the arranged common pilot signals, and the phase control determining unit 37 outputs the phase control notification signal j4.

The pilot arrangement information generating unit 32 notifies the transmission circuit unit 22 of at least one of the pilot arrangement information j5, which is the arrangement information of pilot channels, the phase control notification signal j4, which is the information on whether or not the phase control is needed, and the frequency diversity/multi-user diversity notification signal j2 that distinguishes whether to set each chunk at a frequency diversity region or at a multi-user diversity region.
In addition, the phase control determining unit 37 notifies the transmission diversity determining unit 42 of at least one of the phase control notification signal j4 and the frequency diversity/multi-user diversity notification signal j2, based on reception quality information s2 included in a reception signals s1 which is transmitted by the terminal, which is a wireless receiver.
In addition, the transmission diversity determining unit 42 notifies the transmission circuit unit 22 of at least one of the phase control notification signal j4 and the frequency diversity/multi-user diversity notification signal j2, based on the outputs of the pilot arrangement information generating unit 43 and the phase control determining unit 37.
In addition, the transmission circuit unit 22 performs the allocation of pilot channels based on the pilot arrangement information j 5, performs phase control for each of n transmission antennas (n being an integer of 2 or greater) based on the phase control notification signal j4, and adds different delays to the respective n transmission antennas in accordance with the frequency diversity/multi-user diversity notification signal j2.

In addition, the pilot arrangement information generating unit 43 may perform the allocation of pilot channels for channel estimation and may use the frequency diversity/multi-user diversity notification signal j2 to notify that at least one part of the pilot channels which are allocated to a plurality of chunks in the frequency direction is a multi-user diversity region, and the transmission circuit unit 22 may set the maximum delay difference of the different delay for each transmission antenna to 1/Fc or lower in the multi-user diversity region based on the frequency diversity/multi-user diversity notification signal j2 and may transmit the pilot channels.

In addition, the pilot arrangement information generating unit 43 may perform the allocation of the pilot channel for channel estimation, and may use the frequency diversity/multi-user diversity notification signal j2 to notify that at least one part of pilot channels allocated to a plurality of chunks is a multi-user diversity region and that at least one part of the pilot channels is a frequency diversity region, and based on the frequency diversity/multi-user diversity notification signal j2, the transmission circuit unit 22 may set the maximum delay difference among the different delays for the respective transmission antennas to 1/Fc or lower in the multi-user diversity region and may transmit the pilot channels, and may set the maximum delay difference among the different delays for the respective transmission antennas to 1/Fc or greater in the frequency diversity region and may transmit the pilot channels.

The pilot arrangement information generating unit 43 performs code multiplexing and allocates pilot channels for channel estimation of multi-user diversity and frequency diversity, and the transmission circuit unit 22 uses a plurality of orthogonal codes corresponding to a plurality of transmission diversities to add different delays for respective transmission antennas to respective transmission diversities and performs the transmission of the pilot channels.

The phase control determining unit 37 compares the average reception quality for a plurality of chunks with the reception quality of chunks allocated to a terminal itself based on the reception quality information (received power, reception SINR, etc.) transmitted by the terminal, which is a wireless receiver, and decides whether or not phase control is necessary.

In addition, the phase control determining unit 37 may compare the reception quality for when the maximum delay difference among the different delays for respective transmission antennas is set to 1/Fc or lower and the pilot channel is transmitted with the reception quality for when the maximum delay difference among the different delays for respective transmission antennas is set to 1/Fc or greater and the pilot channel is transmitted, based on the reception quality information (received power, reception SINR, etc.) transmitted by the terminal, which is a wireless receiver, and may decide whether or not phase control is necessary.

In addition, the phase control determining unit 37 may compare the reception quality for when the maximum delay difference among the different delays for respective transmission antennas is set to 1/Fc or greater with the reception quality for when the maximum delay difference among the different delays for respective transmission antennas is set to 1/Fc or lower and the phase control is performed and with the reception quality for when the maximum delay difference among the different delays for respective transmission antennas is set to 1/Fc or lower and the phase control is not performed, based on reception quality information (received power, reception SINR, etc.) transmitted by a terminal, which is a wireless receiver, may decide whether or not phase control is necessary, and may select whether to use frequency diversity or to use multi-user diversity.

FIG. 25 is a flow chart showing the processing in the phase control determining unit 37 (FIG. 24). At first, a terminal, which is a wireless receiver, measures the reception quality of chunks for all bands by observing common pilot signals. The base station device adds a maximum delay time difference of 1/Fc or lower to the common pilot signals for measuring the multi-user diversity effect and transmits. The terminal notifies the observed MCS of the base station device, which is a wireless transmitter.

The base station device collects reception quality information of the chunks for all the bands from the terminal (step m1). Here, MCS (Modulation and Coding Scheme) information is used as the reception quality information.

Next, the average value of MCS in all the bands is calculated (step m2). Then, the MCS calculated in step m2 is compared with the MCS of the chunk itself (step m3). If the MCS of the chunk itself is equal to or greater than the average value of the MCS in all the bands, it is determined to be a good quality chunk, and if it is equal to or less than the average value, it is determined to be a poor quality chunk. An MCS calculated from the average received power or the average SINR (Signal to Interference and Noise Power Ratio) of all the bands may be used, instead of the average value of the MCS in all the bands.

When it has been determined by the base station device that a chunk to which a terminal is allocated is a good quality chunk, in the same manner as when a common pilot signal is transmitted, phase control is not performed, and a signal is transmitted to a wireless receiver where the maximum delay time difference between the transmission antennas is set to 1/Fc or lower (step m4). On the other hand, when it has been determined to be a poor quality chunk, a maximum delay time difference of 1/Fc or lower is added between transmission antennas and a signal is transmitted to a terminal after phase control has been performed (step m5). As a method for phase control, the phase of the subcarrier signal of the chunk bandwidth is rotated by π. Phase control is performed in at least one transmission antenna that gives the maximum delay time difference. As phase control, instead of performing a phase rotation, the code of the subcarrier signal may be inverted. Finally, the phase control determining unit 37 of the MAC unit 2 1 (FIG. 24) outputs the phase control notification signal j4 to notify of whether or not to perform phase control. The transmission circuit unit 22 is controlled by the phase control notification signal j4.

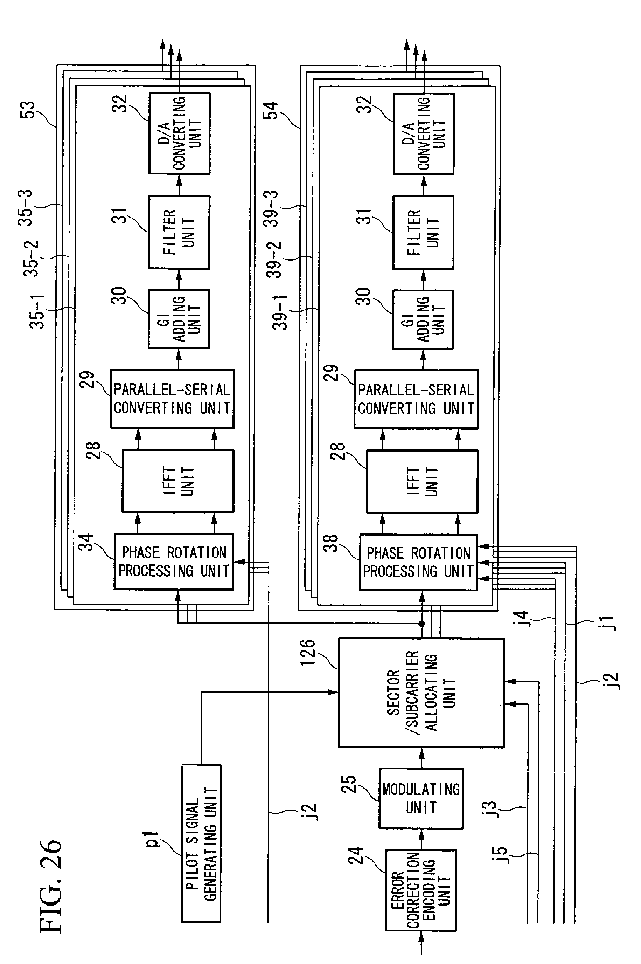

FIG. 26 is a block diagram showing the configuration of a transmission circuit unit in accordance with the third embodiment of the present invention. Portions with identical configurations to those of the transmission circuit unit (FIG. 23) in accordance with the first embodiment are referred to by using the same reference symbols, and explanations thereof will be omitted. A sector/subcarrier allocating unit 126 not only allocates data of each terminal to each sector and each subcarrier, but also allocates a pilot signal output from a pilot signal generating unit p1 to each sector and each subcarrier, based on the sector/subcarrier allocation information j3. In addition, the operation of a phase rotation processing unit 38 differs depending on the contents of phase control notification signal j4. At first, a phase rotation processing unit 3 performs a phase rotation corresponding to frequency diversity or multi-user diversity in accordance with a frequency diversity/multi-user diversity notification signal j2 for a terminal to which the inter sector diversity signal j 1 has been sent. Furthermore, the phases of corresponding subcarrier signals are rotated by π uniformly for transmission antenna circuit unit 39-1 to 39-3 to which notification of the phase control notification signal j4 has been sent.

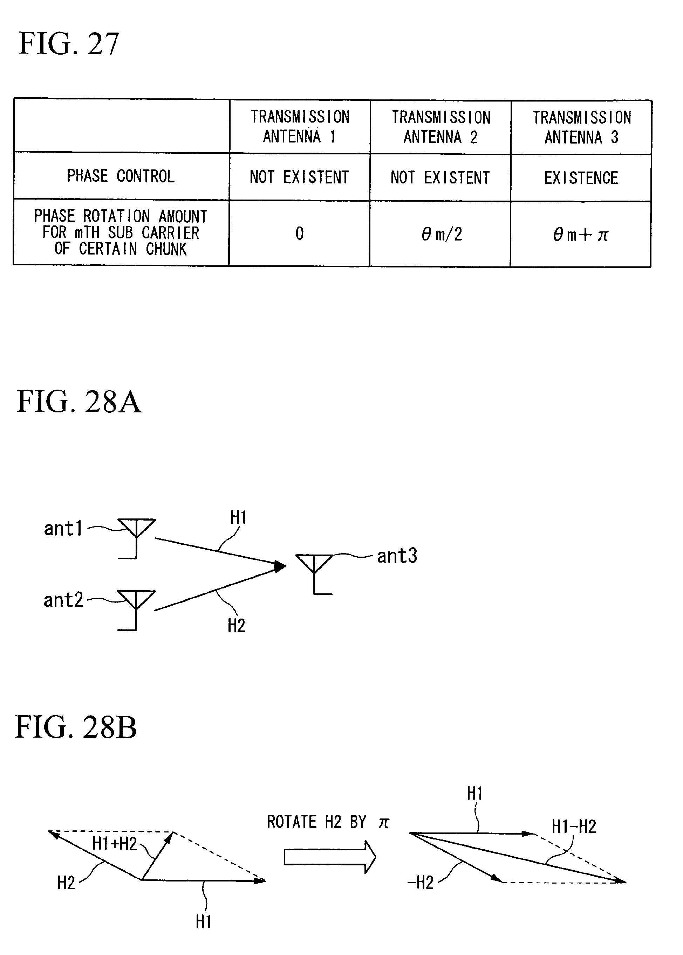

FIG. 27 is a table showing an example of the amount of phase rotation which is given to each transmission antenna when phase control is performed by the phase rotation processing unit 3. Here, a case will be explained where a base station device is provided with three transmission antennas 1 to 3. Usually, when multi-user diversity is performed, a phase rotation amount of θm/2 is given at a transmission antenna 2 and a phase rotation amount of θm is given at a transmission antenna 3 using a transmission antenna 1 as a reference. However, when the transmission antenna 3 is notified that phase control in accordance with step m5 of FIG. 25 is to be performed, the phase rotation processing unit of the transmission antenna 3 uniformly rotates the phase θm of corresponding subcarrier signals by π to set it to θm + π. For example, the transmission circuit unit 22 rotates the phase of at least one transmission antenna by π when it has been notified from the MAC unit 21 that phase control by the phase control notification signal j4 is necessary.

FIG. 28 is a diagram that explains an effect when phase control is performed by the phase rotation processing unit 3. FIG. 28A shows a case in which signals are transmitted from two transmission antennas ant1 and ant2, and are received by one reception antenna ant3. Here, the transfer function between the transmission antenna ant1 and the transmission antenna ant3 is H1. In addition, the transfer function between the transmission antenna ant2 and the transmission antenna ant3 is H2. Then, as illustrated in FIG. 28B, the transfer function that is observed at the terminal, which is a wireless receiver, is a vector H1+H2 which is a composition of a vector H1 and a vector H2. Here, a case will be explained where the vector H1 and the vector H2 weaken each other. That is, a case will be explained where the size of the vector H 1+H2 is smaller than the size of the vector H1 and the size of the vector H2. In such cases, when the phase of the vector H2 is rotated by $\pi$, the composition vector observed at the terminal becomes H1-H2, and they strengthen each other by the phase rotation, although they weaken each other when the phase rotation is not performed. Thereby, reception quality in the terminal can be improved.

In addition, here, phase control is performed at one transmission antenna, but when the number of the transmission antennas is W, phase control can be performed from a minimum of one transmission antenna to the maximum of W-1 transmission antennas.

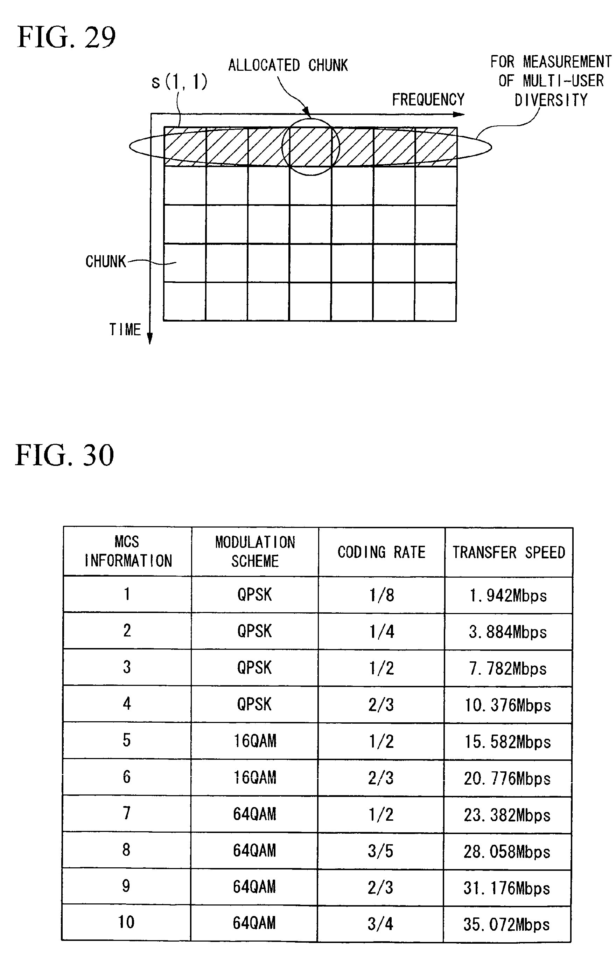

FIG. 29 is a diagram to explain a method for measuring an MCS, which is the reception quality in the present embodiment. The horizontal axis shows a frequency domain, and the vertical axis shows a time domain. Here, a case is shown when division is made so that there are seven subcarriers in the frequency domain direction. Moreover, a case is shown when division is made so that there are five OFDM symbols in the time domain direction. In addition, when the chunk located in the smallest region in the frequency and time domains is expressed as s (1, 1), the chunk specified by the OFDM symbol of the x line and the yth subcarrier is expressed by s (x, y).

Assuming that a chunk to which a terminal has been allocated beforehand is s (1, 4) as illustrated in FIG. 29, the pilot signal arrangement information generating unit 43 (FIG. 24) performs grouping by collecting s (1, 1) to s (1, 7) in the frequency domain direction so as to include s (1, 4), and outputs pilot arrangement information j 5 for arranging common pilot signals to those chunks. Based on this pilot arrangement information j 5, common pilot signals generated by the pilot signal generating unit p1 (FIG. 26) are arranged by the sector/subcarrier allocating unit 126. However, it is acceptable that the chunks of all bands in certain transmission timing are grouped, and common pilot signals are arranged in the grouped chunks. The terminal observes the reception quality of the multi-user diversity effect of the chunks of all bands by observing the common pilot signals which are transmitted with delay time difference(s) of 1/Fc or lower added between transmission antennas.

FIG. 30 is a table showing an example of the MCS information used in the present embodiment. As shown in this table, as the demand of the transmission speed of a terminal, which is a wireless receiver, increases from 1.942 Mbps, the value of the MCS information increases. In addition, the modulation scheme changes with QPSK, 16 QAM, and 64 QAM, and the coding rate nears 1 slowly. In addition, here, common pilot signals are used for the observation of the reception quality, it is not always necessary to use common pilot signals, and other signals such as a dedicated pilot channel (DPICH) maybe used as long as they allow the observation of reception quality.

In addition, although an explanation has been made for when phase control is performed only in the sector SC2, phase control may also be performed in the sector SC1.

In the third embodiment of the present invention stated above, the reception quality of chunks in the frequency direction is measured, the reception quality of the chunk itself is judged, and it is decided whether or not phase control is necessary. Therefore, a multi-user diversity effect can be acquired because the communication quality is improved by phase control.

(Fourth Embodiment)

The present embodiment is different from the third embodiment in the selection method of the transmission diversity effect. The present embodiment determines whether or not to perform phase control using frequency diversity effect as a reference.

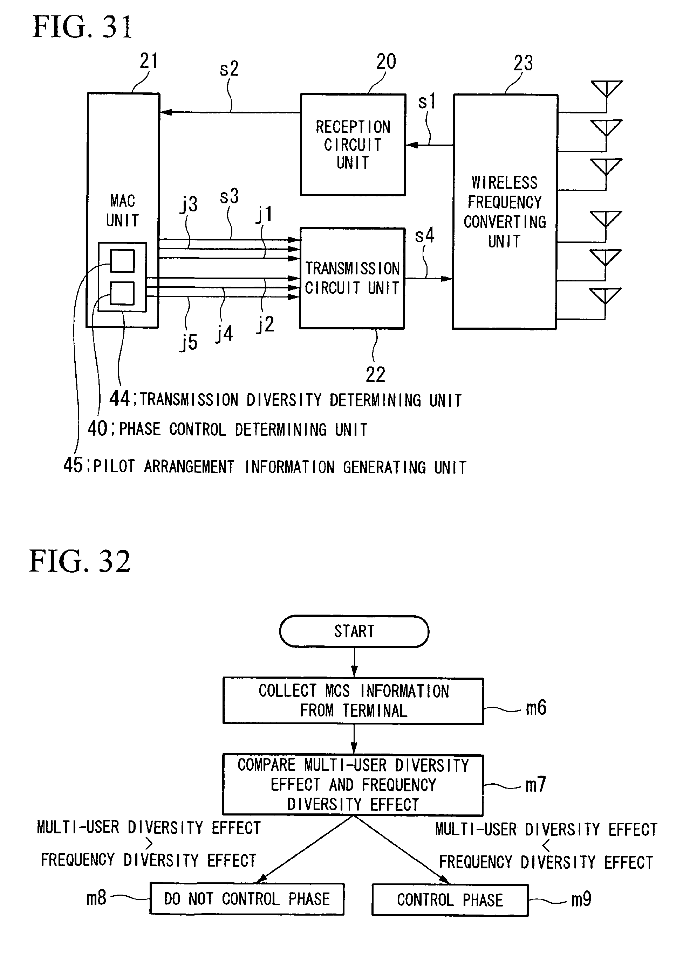

FIG. 31 is a block diagram showing an example of the configuration of a base station device in accordance with the fourth embodiment of the present invention, and the basic configuration thereof is the same as that of FIG. 17. The transmission circuit unit 22 is controlled by the sector/subcarrier allocation information j3, which is the output from the MAC unit 21, the inter sector diversity notification signal j1, the phase control notification signal j4, the multi-user diversity/frequency diversity notification signal j2, and the pilot arrangement information j5. In these signals j1 to j 5, the phase control notification signal j4 and the pilot arrangement information j5 are output from a transmission diversity determining unit 44. The transmission diversity determining unit 44 consists of a pilot arrangement information generating unit 45 and a phase control determining unit 40.

The pilot arrangement information generating unit 45 performs the allocation of pilot channels for channel estimation, uses the frequency diversity/multi-user diversity notification signal j2 to notify that at least one part of the pilot channels allocated to a plurality of chunks is a multi-user diversity region and at least one part of the pilot channels is a frequency diversity region, and notifies that at least one part of the multi-user diversity region needs phase control and at least one part doesn't need phase control, by using the phase control notification signal j4.

In the transmission circuit unit of the wireless transmitter as recited in claim 10, wherein, based on the frequency diversity/ multi-user diversity notification signal, in the multi-user diversity region, the maximum delay difference among the different delays for respective transmission antennas is set to 1/Fc or lower and the transmission of the pilot channels is performed, and in the frequency diversity region, the maximum delay difference among the different delays for respective transmission antennas is set to 1/Fc or greater, phase control for the respective transmission antenna is performed based on the phase control notification signal, and the transmission of the pilot channels is performed.

FIG. 32 is a flow chart showing the processing in the phase control determining unit 40 (FIG. 31). At first, in order for the measurement of the transmission diversity effect, the base station device, which is a wireless transmitter, transmits common pilot signals for measuring the multi-user diversity effect to give a maximum delay time difference of 1/Fc or lower, and common pilot signals for measuring the frequency effect to add a maximum delay time difference of 1/Fc or greater. The terminal, which is a wireless receiver, observes the common pilot signals, measures the reception quality of the multi-user diversity effect and the frequency diversity effect, and notifies a base station of reception quality information. Here, MCS information is used as the reception quality information. The base station collects the notified MCS information (step m6).

Then, a frequency diversity effect is compared with a multi-user diversity effect (step m7). When the MCS of the multi-user diversity effect is larger than the MCS of the frequency diversity effect, a multi-user diversity is used as a transmission diversity as is, and the phase control notification signal indicating that the phase control is not performed is output (step m8). On the other hand, when the MCS of the multi-user diversity effect is smaller than the MCS of the frequency diversity effect, the multi-user diversity effect which has been subjected to phase control is used as transmission diversity, and the phase control notification signal j4 indicating that the phase control is performed is output to the transmission circuit unit 22 (step m9).

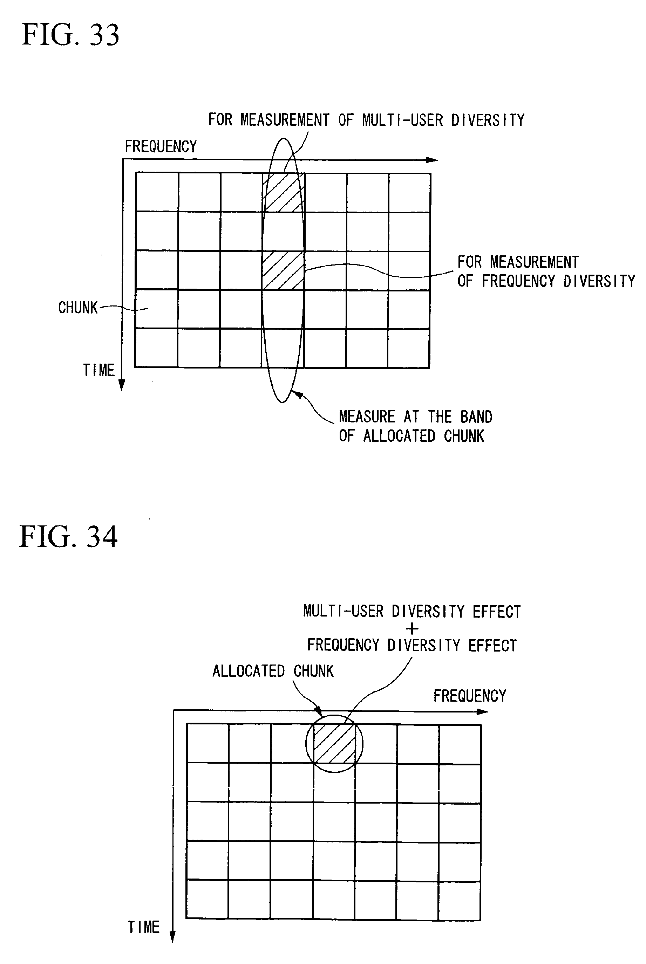

FIG. 33 is a diagram to explain the method for measuring an MCS, which is the reception quality in the present embodiment. In addition, the meaning of chunk s (x, y) is the same as that explained in FIG. 29.

The pilot arrangement information generating unit 45 (FIG. 31) determines the band of chunks s (1, 4), s (2, 4), s (3, 4), s (4, 4), and s (5, 4) to which a terminal, which is a wireless receiver, has been allocated beforehand, and determines the chunk s (1, 4) in which a multi-user diversity effect is measured at a determined transmission timing and the chunk s (4, 3) in which a frequency diversity effect is measured at a determined transmission timing, and outputs the pilot arrangement information j 5 (FIG. 31) for arranging common pilot signals to the determined chunks to the transmission circuit unit 22.

The common pilot signals generated by the pilot signal generating unit p1 (FIG. 26) are arranged by the sector/subcarrier allocating unit 126 (FIG. 26) based on the pilot arrangement information j5. As for the common pilot signals, a delay time difference of 1/Fc or lower is given in the chunk in which the multi-user diversity effect is measured, and a delay time difference of 1/Fc or greater is given in the chunk in which the frequency diversity effect is measured, and it is transmitted. The terminal measures the multi-user diversity effect and the frequency diversity effect by observing the common pilot signals in the determined chunks.

FIG. 34 is a diagram to explain the method for measuring the multi-user diversity effect or the frequency diversity effect in the present embodiment. In addition, the meaning of chunk s (x, y) is the same as that explained in FIG. 29.

A common pilot signal for the measurement of the multi-user diversity effect or the frequency diversity effect is code multiplexed and arranged in the allocated chunk (here, chunk s (1, 4)). At this time, since a common pilot signal is arranged only in the allocated chunk, special pilot arrangement information is not necessary.

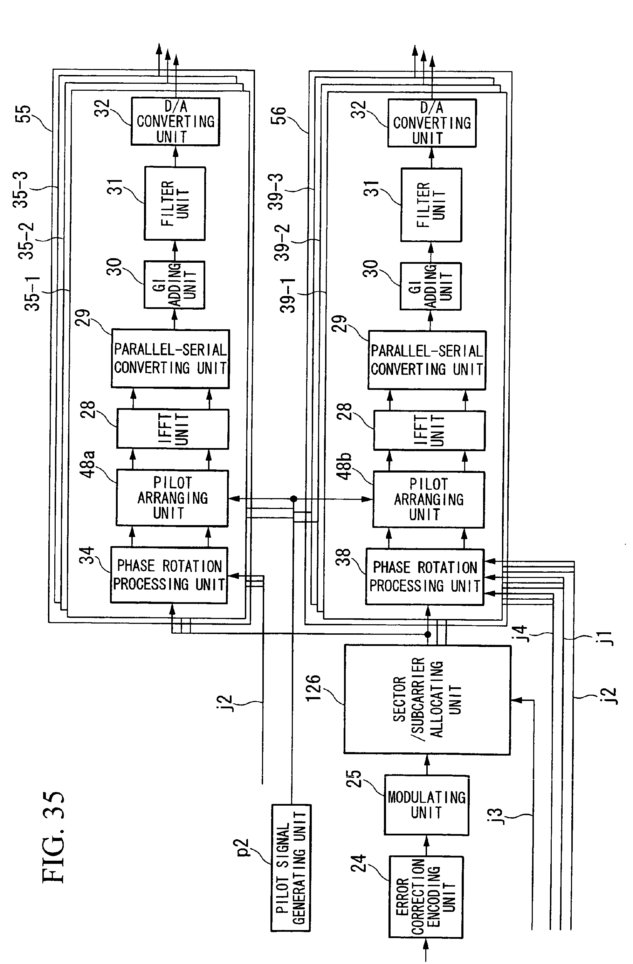

FIG. 35 is a block diagram showing the configuration of a transmission circuit unit in accordance with the fourth embodiment of the present invention, and the basic configuration thereof is similar to the first embodiment (FIG. 18), except for the following points. A common pilot signal output from the pilot signal generating unit p2 is input into pilot arranging units 48a and 48b along with the outputs of phase rotation processing units 34 and 38. The pilot arranging units 48a and 48b combine the code multiplexed common pilot signals and the outputs of the phase rotation processing unit 34 and 38, as illustrated in FIG. 8, and output. The code multiplexed common pilot signals are arranged in the regions r1 to r10 in FIG. 8.

Next, the code-multiplexing process in each of the transmission antenna circuit units 35-1 to 35-3 and the pilot arranging units 48a and 48b will be explained. In addition, here, a case will be explained where the phase rotation amount corresponding to the frequency diversity and the phase rotation amount corresponding to the multi-user diversity is determined for each transmission antenna circuit unit. At this time, the pilot arranging unit 48a multiplexes the product of the phase rotation amount corresponding to the multi-user diversity effect and a common pilot signal for the measurement of the multi-user diversity effect, and the product of the phase rotation amount corresponding to the frequency diversity effect and a common pilot signal for the measurement of the frequency diversity effect. The terminal measures the reception quality of the multi-user diversity effect and the frequency diversity effect by demultiplexing the multiplexed common pilot signals.

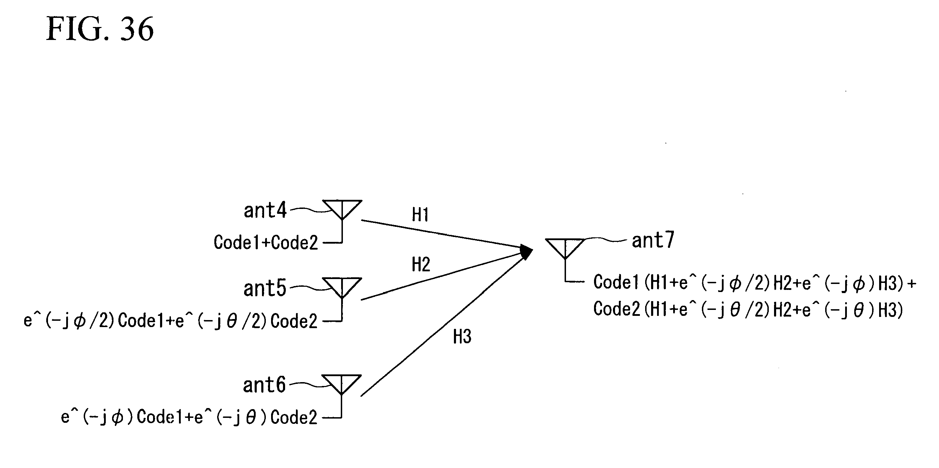

FIG. 36 is a diagram to explain the processing of the pilot arranging unit 48a. Here, a case will be explained where code multiplexing is performed when there are three transmission antennas. The code for multi-user diversity is Code 1 and the code for frequency diversity is Code 2. In addition, the phase rotation amount corresponding to the multi-user diversity effect when the maximum delay time difference is 1/Fc or lower is $\varphi m$, and the phase rotation amount corresponding to the frequency diversity effect when the maximum delay time difference is 1/Fc or greater is $\theta m$.

The transmission antenna ant4 transmits a code multiplexed signal Code 1 + Code 2 as is. The transmission antenna ant5 multiplexes the product of the phase rotation amount $\varphi m/2$ and Code 1 with the product of the phase rotation amount $\theta m/2$ and Code 2, and transmits the following signal.

## [Equation 1]

$$Code\,1 \times e^{-j\varphi m/2} + Code\,2 \times e^{-j\theta m/2}$$

In addition, the transmission antenna ant6 multiplexes the product of the phase rotation amount φm and Code 1 with the product of the phase rotation amount θm and Code 2, and outputs the following signal.
## [Equation 2]

$$Code\,1 \times e^{-j\varphi m} + Code\,2 \times e^{-j\theta m}$$

When a transfer function between the transmission antenna ant4 and the reception antenna ant7 is H1, a transfer function between the transmission antenna ant5 and the reception antenna ant7 is H2, and a transfer function between the transmission antenna ant6 and the reception antenna ant7 is H3, the reception signal in the receiving antenna ant7 becomes the following.
## [Equation 3]

$$Code\,1\left(H1 + e^{-j\varphi m/2} \times H2 + e^{-j\varphi m} \times H3\right)$$
$$+ Code\,2\left(H1 + e^{-j\theta m/2} \times H2 + e^{-j\theta m} \times H3\right)$$

For example, orthogonal codes, such as (1, 1, 1, 1) and (1, -1, 1, -1) are respectively used for Code 1 and Code 2. When an observation of multi-user diversity effect is desired, a terminal makes an observation by multiplying Code 1 by a reception signal, and when an observation of frequency diversity effect is desired, the terminal makes an observation by multiplying Code 2 by a reception signal.
The fourth embodiment of the present invention stated above determines the necessity of phase control using the frequency diversity effect as a reference. Therefore, a multi-user diversity effect that is better than a frequency diversity effect can be acquired.

(Fifth Embodiment)

The present embodiment differs from the third embodiment in its selection method for the transmission diversity effect. The present embodiment observes respective diversity effects from a candidate of the transmission diversity, and chooses the best transmission diversity effect therefrom.

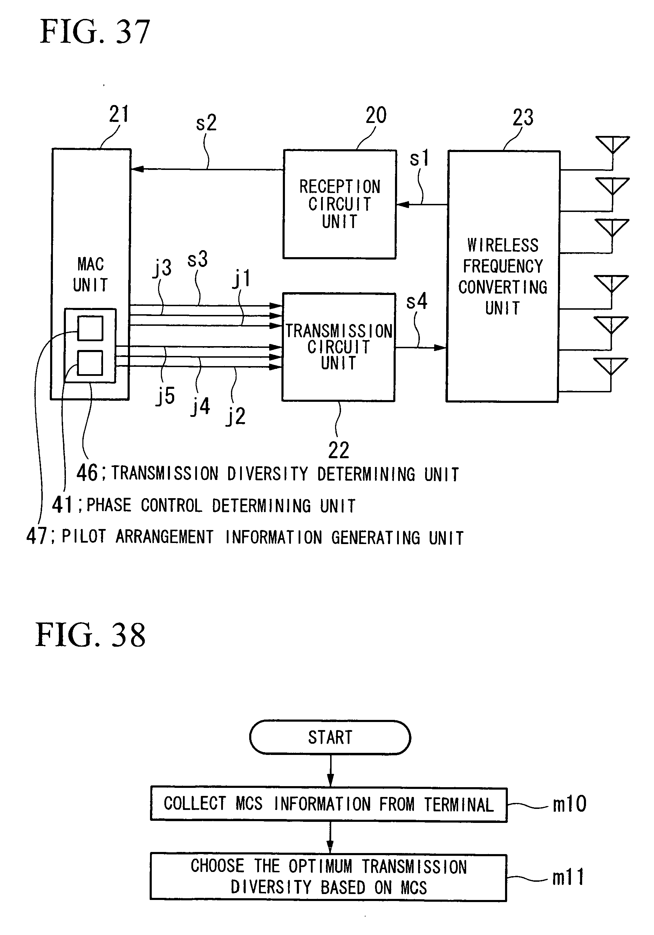

FIG. 37 is a block diagram showing an example of the configuration of a base station device in accordance with the fifth embodiment of the present invention, and the basic configuration thereof is the same as that in FIG. 17. The transmission circuit unit 22 is controlled by the sector/subcarrier allocation information j3 that is the output from the MAC unit 21, the inter sector diversity notification signal j 1, the frequency diversity/multi-user diversity notification signal j2, the phase control notification signal j4, and the pilot arrangement information j5. In these signals, the multi-user diversity/frequency diversity notification signal j2, the phase control notification signal j4, and the pilot arrangement information j5 are generated by a transmission diversity determining unit 46. The transmission diversity determining unit 46 consists of a pilot arrangement information generating unit 47 and a phase control determining unit 41.
FIG. 38 is a flow chart showing the processing in the phase control determining unit 41 (FIG. 37). At First, in order for the measurement of the transmission diversity effect, the base station transmits common pilot signals for the measurement of the multi-user diversity effect that gives a maximum delay time difference of 1/Fc or lower, common pilot signals for the multi-user diversity which has been subjected to phase control, and common pilot signals for the frequency diversity effect measurement that gives the maximum delay time difference of 1/Fc or greater, in the band of the chunk to which the terminal, which is a wireless receiver, has been allocated. The terminal observes the common pilot signals and notifies a base station device of reception quality information. Here, MCS information of each transmission diversity effect is used as the reception quality information. The base station device collects the MCS information received from the terminal (step m10) and chooses the transmission diversity having the maximum MCS therefrom (step m11). A transmission diversity candidate having a good reception quality may be chosen from the multi-user diversity effect and the multi-user diversity effect which has been subjected to phase control.

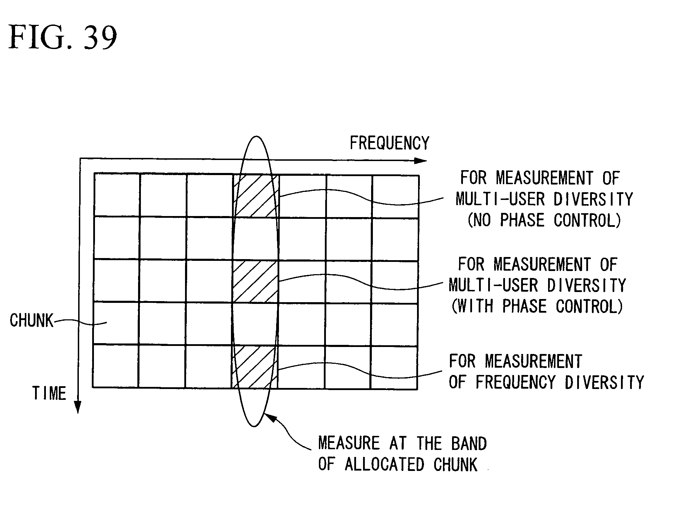

FIG. 39 is a diagram to explain the method for measuring the multi-user diversity effect or of the frequency diversity effect in the present embodiment.

The pilot arrangement information generating unit 47 (FIG. 37) generates, at predetermined transmission timing in the bands of the chunks to which the terminal has been allocated, the pilot arrangement information j5 (FIG. 37) for arranging into chunks which are used for the measurement of transmission diversity effect, the transmission diversity effect including three kinds: a multi-user diversity effect; a multi-user diversity effect which has been subjected to phase control; and the frequency diversity effect, or two kinds: a multi-user diversity effect; and a multi-user diversity effect which has been subjected to phase control, and outputs the pilot arrangement information j5 together with the multi-user diversity/ frequency diversity notification signal j2 of corresponding transmission diversity effect, and the phase control notification signal j4 to the transmission circuit unit 22.

The sector/subcarrier allocating unit 126 arranges the common pilot signals generated by the pilot signal generating unit p1 (FIG. 26) based on the pilot arrangement information j5. A delay time difference of 1/Fc or lower is given to a common pilot signal for the measurement of the multi-user diversity effect, and a delay time difference of 1/Fc or greater is given to a common pilot signal for the measurement of the frequency diversity effect, and the common pilot signals are transmitted. The terminal observes the reception quality of respective transmission diversity effects by measuring the common pilot signals in the determined chunks.

Next, the methods (5) and (6) for measuring MCS information in a case where only allocated chunks are used will be explained. In the same manner as the fourth embodiment, a measurement method (5) performs code multiplexing of common pilot signals for the measurement of respective transmission diversity effects, and when a transmission diversity effect is measured, demultiplexes the multiplexed common pilot signals, and observes the reception quality. In addition, unlike the fourth embodiment, the present embodiment may multiplex three kinds of CPICH, but the processing is similar.

A measurement method (6) does not perform code multiplexing of common pilot signals, but measures respective transmission diversity effects using several frames.

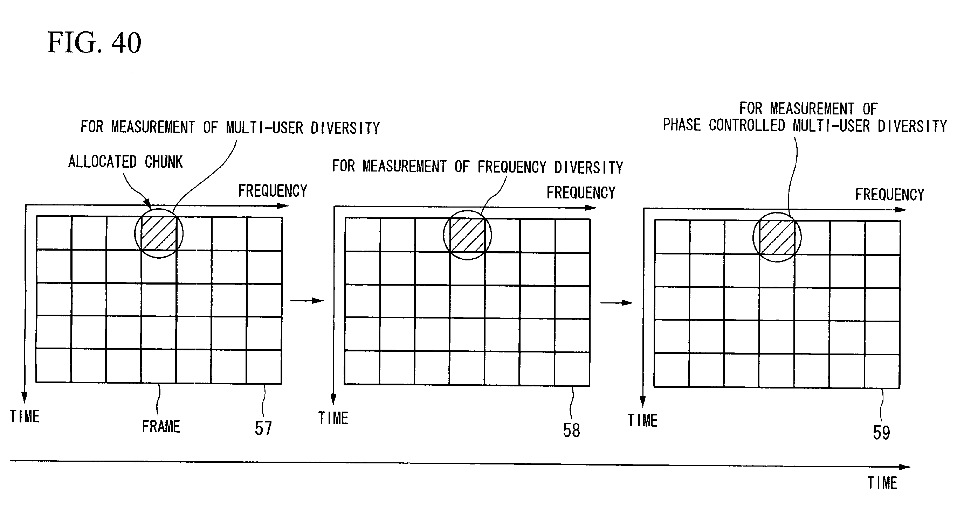

FIG. 40 is a diagram to explain the measurement method (6). As illustrated in the diagram, frames consists of chunks arranged in a frequency direction and a time direction, and a first frame 57, a second frame 58, and a third frame 59 are transmitted in order from a base station device to a terminal. In addition, in order to change transmission diversity effects to be measured for the respective frames, the frequency diversity/multi-user diversity notification signal j2 (FIG. 37) and the phase control notification signal j4 are changed depending on the corresponding transmission diversity effect for chunks that are allocated for the respective frames. In addition, a plurality of chunks may extend over a plurality of frames and may be communicated between a wireless transmitter and a wireless receiver.

The pilot arrangement information generating unit 47 (FIG. 37) outputs the pilot arrangement information j 5, the multi-user diversity/frequency diversity notification signal j2, and the phase control notification signal j4 based on a measurement method of FIG. 40. The sector/subcarrier allocating unit 126 arranges the common pilot signals generated in the pilot signal generating unit p1 (FIG. 26) in chunks in the determined frames to which the terminal has been allocated, the common pilot signals including a common pilot signal for the measurement of the multi-user diversity effect, a common pilot signal for the measurement of the frequency diversity effect, and a common pilot signal for the measurement of the multi-user diversity effect which has been subjected to phase control.

When respective transmission diversity effects are measured, the base station device transmits using the chosen transmission diversity from subsequent frames. By doing so, even when only allocated chunks can be used, the respective transmission diversity effects can be observed without performing code multiplexing.

The fifth embodiment of the present invention stated above chooses the transmission diversity effect having the best quality from among a multi-user diversity effect and a multi-user diversity effect which has been subjected to phase control, or a multi-user diversity effect, a frequency diversity effect, and a multi-user diversity effect which has been subjected to phase control. Therefore, the optimum transmission diversity effect can be acquired.

In addition, in the embodiments explained above, a program to realize functions or part of these functions of the reception circuit unit 20, the MAC unit 21, the transmission circuit unit 22, the wireless frequency converting unit 23, the phase control determining units 37, 40, and 41, the transmission diversity determining units 42, 44, and 46, and the pilot arrangement information generating units 43, 45, and 47 in FIG. 17, FIG. 24, FIG. 31, and FIG. 37, and the error correction encoding unit 24, the modulating unit 25, the sector/subcarrier allocating units 26 and 126, the phase rotation processing units 27, 34, 134, and 38, the IFFT unit 28, the parallel-serial converting unit 29, the GI adding unit 30, the filter unit 31, the D/A converting unit 32, the pilot arranging units 48, 48a, and 48b, and the pilot generating units p1 and p2 in FIG. 18, FIG. 23, FIG. 26, and FIG. 35 may be recorded in a computer-readable recording medium, and a wireless transmitter may be controlled by reading the program receded in this recording medium into a computer system and executing it. In addition, the "computer system" here shall include an OS and hardware such as peripheral devices.

In addition, "computer-readable recording media" are portable media such as flexible disks, magneto-optical disks, ROMs, CD-ROMs, and storage devices such as hard disks built-in computing systems. Furthermore, "computer-readable recording media" are those which dynamically maintain programs for a short time such as communication lines when programs are transmitted through telecommunication lines such as networks like Internet or phone lines, and shall include those which maintain programs at a set time, such as a volatile memory provided in computer systems that becomes a server or a client in that case. In addition, the aforementioned program may realize a portion of the aforementioned functions, and may realize the aforementioned functions by a combination with a program that is already recorded in a computer system.

As mentioned above, embodiments of this invention have been explained by referring to the diagrams, but specific configurations are not limited to these embodiments, and designs that do not deviate from the gist of this invention are included.

INDUSTRIAL APPLICABILITY

The present invention can be applied to wireless transmitters and wireless transmission methods that transmit signals from a plurality of transmission antennas to a wireless receiver, and can improve communication quality by transmitting signal to the wireless receiver by adding different delays to respective transmission antennas and using either multi-user diversity or frequency diversity.

**Claims**

1. A wireless transmitter comprising:

    a transmission circuit control unit that notifies of a transmission diversity notification signal which notifies of the execution of transmission diversity between sectors, and
    a transmission circuit unit that adds delays that differ for respective n transmission antennas, n being an integer of 2 or greater, based on the transmission diversity notification signal.

2. The wireless transmitter as recited in claim 1, wherein
    the transmission circuit control unit notifies of a frequency diversity/multi-user diversity notification signal that distinguishes whether each chunk is a frequency diversity region or a multi-user diversity region, and
    the transmission circuit unit adds the delays that differ for the respective n transmission antennas based on at least one of the frequency diversity/multi-user diversity notification signal and the transmission diversity notification signal.

3. The wireless transmitter as recited in claim 1, wherein the n transmission antennas belong to at least j sectors, j being an integer of 2 or greater.

4. The wireless transmitter as recited in claim 1, wherein when the transmission diversity notification signal has been notified, the transmission circuit unit sets at least one of delay differences for the n transmission antennas to $1/Fc$ or greater, Fc being the frequency bandwidth of a chunk.

5. The wireless transmitter as recited in claim 4, wherein the transmission circuit unit sets at least one of delay differences for transmission antennas belonging to different sectors among the transmission antennas belonging to the sectors, to $1/Fc$ or greater.

6. The wireless transmitter as recited in claim 4, wherein the transmission circuit unit sets at least one of delay differences for transmission antennas belonging to the same sector in at least one sector among the transmission antennas belonging to the sectors, to $1/Fc$ or greater.

7. The wireless transmitter as recited in claim 4, wherein the transmission circuit unit sets at least one of delay differences for transmission antennas belonging to the same sector in at least one sector among the transmission antennas belonging to the sectors, to $1/Fc$ or greater and sets at least one of delay differences for transmission antennas belonging to different sectors, to $1/Fc$ or greater.

**8.** The wireless transmitter as recited in claim 6 or claim 7, wherein when performing transmission diversity between sectors for a wireless receiver, in a sector in which at least one of the delay differences for the transmission antennas belonging to the same sector is set to 1/Fc or greater, a transmission signal is transmitted to the wireless receiver before performing transmission diversity between the sectors.

**9.** The wireless transmitter as recited in claim 6 or claim 7, wherein when performing transmission diversity between sectors for a wireless receiver, in a sector in which at least one of the delay differences for the transmission antennas belonging to the same sector is set to 1/Fc or greater, a transmission signal is not transmitted to the wireless receiver before performing transmission diversity between the sectors.

**10.** A wireless transmitter comprising:

a transmission diversity determining unit that chooses the optimum transmission diversity among a plurality of transmission diversities based on reception quality information transmitted from a wireless receiver; and
a transmission circuit unit that performs phase control of n transmission antennas, n being an integer of 2 or greater, or adds delays that differ for the n transmission antennas based on the optimum transmission diversity.

**11.** The wireless transmitter as recited in claim 10, further comprising a pilot arrangement information generating unit that notifies the transmission circuit unit of pilot arrangement information that is arrangement information of a pilot channel and of at least one transmission diversity among the plurality of transmission diversities, wherein the transmission circuit unit allocates the pilot channel to a plurality of chunks, performs the phase control for the respective transmission antennas or adds delays that differ for the respective transmission antennas, and transmits the pilot channel, based on the pilot arrangement information and the transmission diversity.

**12.** The wireless transmitter as recited in claim 11, wherein the plurality of chunks are allocated to at least one of a communication frequency band and a communication time zone.

**13.** The wireless transmitter as recited in claim 11, wherein the plurality of chunks extend over a plurality of frames.

**14.** The wireless transmitter as recited in claim 10, wherein the plurality of transmission diversities include: a multi-user diversity that is subjected to a multi-user diversity and phase control; and a multi-user diversity that is subjected to a multi-user diversity, a frequency diversity, and phase control.

**15.** The wireless transmitter as recited in claim 14, wherein the pilot arrangement information generating unit performs allocation of pilot channels for channel estimation, notifies that at least one part of the pilot channels allocated to the plurality of chunks is multi-user diversity regions and that at least one part of the pilot channels is frequency diversity regions using a frequency diversity/multi-user diversity notification signal, and notifies whether phase control is necessary for at least one part of the multi-user diversity regions using a phase control notification signal, and based on the frequency diversity/multi-user diversity notification signal, in the multi-user diversity regions, the transmission circuit unit sets a maximum delay difference among the delays that differ for the respective transmission antennas to 1/Fc or lower and transmits the pilot channel, and in the frequency diversity regions, the transmission circuit unit sets at least one of delay differences that differ for the respective transmission antennas to 1/Fc or greater, performs phase control for the respective transmission antennas based on the phase control notification signal, and transmits the pilot channel.

**16.** The wireless transmitter as recited in claim 11 or claim 14, wherein the transmission circuit unit uses a plurality of orthogonal codes corresponding to the plurality of transmission diversities to give delays that differ for the respective transmission antennas for the respective transmission diversities, and transmits the pilot channel.

**17.** The wireless transmitter as recited in claim 15, wherein the transmission diversity determining unit comprises a phase control determining unit that compares a reception quality of a chunk with an average reception quality over the plurality of chunks based on reception quality information transmitted from the wireless receiver, and determines whether or not phase control is necessary.

**18.** The wireless transmitter as recited in claim 15, wherein the transmission diversity determining unit comprises a phase control determining unit that compares a reception quality for when the maximum delay difference among the delays that differ for the respective transmission antennas is set to 1/Fc or lower and the pilot channel is transmitted

## EP 1 944 892 A1

with a reception quality for when at least one of delay differences that differ for the respective transmission antennas is set to 1/Fc or greater and the pilot channel is transmitted, based on reception quality information transmitted from the wireless receiver, and determines whether or not phase control is necessary.

19. The wireless transmitter as recited in claim 15, wherein the transmission diversity determining unit comprises a phase control determining unit which compares, based on reception quality information transmitted by the wireless receiver, a reception quality for when at least one of delay differences that differ for the respective transmission antennas is set to 1/Fc or greater with: a reception quality for when the maximum delay difference among the delays that differ for the respective transmission antennas is set to 1/Fc or lower and phase control is performed; and a reception quality for when the maximum delay difference among the delays that differ for the respective transmission antennas is set to 1/Fc or lower and phase control is not performed, determines whether or not phase control is necessary, and performs selection on whether to use the frequency diversity or the multi-user diversity.

20. The wireless transmitter as recited in claim 10, wherein the transmission circuit unit rotates the phase of at least one of the transmission antennas by $\pi$ when it has been notified that the phase control is necessary by a phase control notification signal.

21. A wireless transmission method comprising:

making notification of a transmission diversity notification signal which notifies of the execution of transmission diversity between sectors; and
adding delays that differ for respective n transmission antennas, n being an integer of 2 or greater, based on the transmission diversity notification signal.

23

FIG. 1

FIG. 2A

FIG. 2B

RECEIVED POWER

RECEIVED POWER

TIME

FREQUENCY

2T

$d_{max}$

| D1 | D1 | D1 | D1 | D2 | D2 | D2 | D2 |

RECEIVED POWER

FIG. 3A

2T    $d_{max}$

TIME

RECEIVED POWER    b1    b2

FIG. 3B

FREQUENCY

D1 D2 D3 D4

RECEIVED POWER

b1    b2

FIG. 3C

FREQUENCY

D1 D2 D3 D4

# FIG. 4A

RECEIVED POWER

w31

w32

TIME

(n-1)T=1/F

# FIG. 4B

RECEIVED POWER

FREQUENCY

F

# FIG. 5A

RECEIVED POWER

w41　w42　w43

TIME

(n-1)T=1/F

# FIG. 5B

RECEIVED POWER

FREQUENCY

F

FIG. 6A

e11

8

e12

10

9

## FIG. 6B

FIG. 6C

RECEIVED POWER

FREQUENCY

RECEIVED POWER

FREQUENCY

## FIG. 7A

# FIG. 7B

RECEIVED POWER

FREQUENCY

# FIG. 7C

RECEIVED POWER

FREQUENCY

# FIG. 8

TIME

r1 r2 r3 r4 r5 r6 r7 r8 r9 r10

K1

FREQUENCY

# FIG. 9

## FIG. 10

(a) RECEIVED POWER

f1　f2　f3　f4

C11

FREQUENCY

(b) RECEIVED POWER

C12

FREQUENCY

(c)

| K1 | K2 | K3 | K4 |
| K5 | K6 | K7 | K8 |
| K9 | K10 | K11 | K12 |
| K13 | K14 | K15 | K16 |
| K17 | K18 | K19 | K20 |

TIME

L11　L12　L13　L14

FREQUENCY

# FIG. 11

(a) RECEIVED POWER

f1   f2   f3   f4

C21

FREQUENCY

(b) RECEIVED POWER

C22

FREQUENCY

(c)

TIME

| K1 | K2 | K3 | K4 |
|----|----|----|----|
| K5 | K6 | K7 | K8 |
| K9 | K10 | K11 | K12 |
| K13 | K14 | K15 | K16 |
| K17 | K18 | K19 | K20 |

L11   L12   L13   L14

FREQUENCY

## FIG. 12

## FIG. 13

## FIG. 14

(a)

RECEIVED
POWER

| f1 | f2 | f3 | f4 |

C41

C42

FREQUENCY

(b)

TIME

| K1 | K2 | K3 | K4 |
|----|----|----|----|
| K5 | K6 | K7 | K8 |
| K9 | K10 | K11 | K12 |
| K13 | K14 | K15 | K16 |
| K17 | K18 | K19 | K20 |

| L11 | L12 | L13 | L14 |

## FIG. 15

| DELAY DIFFERENCE BETWEEN SC1 & SC2 | DELAY DIFFERENCE IN SC1 | DELAY DIFFERENCE IN SC2 |
|---|---|---|
| 1/Fc AND OVER | 1/Fc AND UNDER | 1/Fc AND OVER |
| | | 1/Fc AND UNDER |
| 1/Fc AND UNDER | 1/Fc AND UNDER | 1/Fc AND OVER |

## FIG. 16

# FIG. 17

FIG. 18

EP 1 944 892 A1

# FIG. 19

| FREQUENCY DIVERSITY/ MULTI-USER DIVERSITY NOTIFICATION SIGNAL | FREQUENCY DIVERSITY | | MULTI-USER DIVERSITY | |
|---|---|---|---|---|
| INTER SECTOR DIVERSITY NOTIFICATION SIGNAL | EXISTENCE | NOT EXISTENT | EXISTENCE | NOT EXISTENT |
| PHASE ROTATION AMOUNT FOR MTH SUB CARRIER OF CERTAIN CHUNK | $\phi m$ | $\phi m$ | $\phi m$ | $\theta m$ |

# FIG. 20

| DELAY DIFFERENCE BETWEEN SC1 & SC2 | DELAY DIFFERENCE IN SC1 | DELAY DIFFERENCE IN SC2 |
|---|---|---|
| 1/Fc AND OVER | 1/Fc AND OVER | 1/Fc AND OVER |
| | | 1/Fc AND UNDER |
| 1/Fc AND UNDER | 1/Fc AND OVER | 1/Fc AND OVER |

FIG. 21

FIG. 22A

RECEIVED POWER

f5

C51

FREQUENCY

FREQUENCY

K100

TIME

FIG. 22B

RECEIVED POWER

f6

C52

FREQUENCY

FREQUENCY

K101

TIME

# FIG. 23

EP 1 944 892 A1

FIG. 24

21   s2          20   s1          23

┌─────┐      ┌──────────┐      ┌──────────┐
│     │ ◄─── │ RECEPTION│ ◄─── │          │
│     │  s2  │ CIRCUIT  │  s1  │ WIRELESS │
│     │      │ UNIT     │      │ FREQUENCY│
│ MAC │      └──────────┘      │CONVERTING│
│ UNIT│  j3  j1 s3  j2          │ UNIT     │
│     │   ──────────► ┌──────────┐ s4      │          │
│ ┌─┐ │   ──────────► │TRANSMISSION│ ───►  │          │
│ └─┘ │   ──────────► │ CIRCUIT  │         │          │
│ ┌─┐ │   ──────────► │ UNIT     │         │          │
│ └─┘ │   ──────────► └──────────┘         └──────────┘
└─────┘      j5  j4
                          22

42;TRANSMISSION DIVERSITY DETERMINING UNIT

37;PHASE CONTROL DETERMINING UNIT

43;PILOT ARRANGEMENT INFORMATION GENERATING UNIT

FIG. 25

```
        ┌──────────────┐
        │    START     │
        └──────┬───────┘
               │
   ┌───────────────────────┐
   │ COLLECT MCS INFORMATION OF │
   │    CHUNKS FOR ALL     │── m1
   │  BANDS FROM TERMINAL  │
   └───────────┬───────────┘
               │
   ┌───────────────────────┐
   │ CALCULATE AVERAGE VALUE OF MCS │── m2
   └───────────┬───────────┘
               │
   ┌───────────────────────┐
   │ COMPARE MCS OF OWN CHUNK │── m3
   │   WITH AVERAGE VALUE  │
   └───────────┬───────────┘
```

MCS OF OWN CHUNK > AVERAGE VALUE                    MCS OF OWN CHUNK < AVERAGE VALUE

m4 ──┤ DO NOT CONTROL PHASE │          │ CONTROL PHASE │── m5

# FIG. 26

EP 1 944 892 A1

# FIG. 27

|  | TRANSMISSION ANTENNA 1 | TRANSMISSION ANTENNA 2 | TRANSMISSION ANTENNA 3 |
|---|---|---|---|
| PHASE CONTROL | NOT EXISTENT | NOT EXISTENT | EXISTENCE |
| PHASE ROTATION AMOUNT FOR mTH SUB CARRIER OF CERTAIN CHUNK | 0 | $\theta m/2$ | $\theta m + \pi$ |

# FIG. 28A

# FIG. 28B

# FIG. 29

# FIG. 30

| MCS INFORMATION | MODULATION SCHEME | CODING RATE | TRANSFER SPEED |
|---|---|---|---|
| 1 | QPSK | 1/8 | 1.942Mbps |
| 2 | QPSK | 1/4 | 3.884Mbps |
| 3 | QPSK | 1/2 | 7.782Mbps |
| 4 | QPSK | 2/3 | 10.376Mbps |
| 5 | 16QAM | 1/2 | 15.582Mbps |
| 6 | 16QAM | 2/3 | 20.776Mbps |
| 7 | 64QAM | 1/2 | 23.382Mbps |
| 8 | 64QAM | 3/5 | 28.058Mbps |
| 9 | 64QAM | 2/3 | 31.176Mbps |
| 10 | 64QAM | 3/4 | 35.072Mbps |

FIG. 31

44;TRANSMISSION DIVERSITY DETERMINING UNIT

40;PHASE CONTROL DETERMINING UNIT

45;PILOT ARRANGEMENT INFORMATION GENERATING UNIT

FIG. 32

START

COLLECT MCS INFORMATION FROM TERMINAL — m6

COMPARE MULTI-USER DIVERSITY EFFECT AND FREQUENCY DIVERSITY EFFECT — m7

MULTI-USER DIVERSITY EFFECT > FREQUENCY DIVERSITY EFFECT

MULTI-USER DIVERSITY EFFECT < FREQUENCY DIVERSITY EFFECT

m8 — DO NOT CONTROL PHASE

CONTROL PHASE — m9

47

## FIG. 33

FOR MEASUREMENT OF MULTI-USER DIVERSITY

FREQUENCY

FOR MEASUREMENT
OF FREQUENCY DIVERSITY

CHUNK

TIME

MEASURE AT THE BAND
OF ALLOCATED CHUNK

## FIG. 34

MULTI-USER DIVERSITY EFFECT
+
FREQUENCY DIVERSITY EFFECT

ALLOCATED CHUNK

FREQUENCY

TIME

FIG. 35

49

# FIG. 36

EP 1 944 892 A1

ant4 — Code1+Code2

$e^{(-j\phi/2)}$Code1+$e^{(-j\theta/2)}$Code2 — ant5

$e^{(-j\phi)}$Code1+$e^{(-j\theta)}$Code2 — ant6

H1

H2

H3

ant7 — Code1$(H1+e^{(-j\phi/2)}H2+e^{(-j\phi)}H3)$ + Code2$(H1+e^{(-j\theta/2)}H2+e^{(-j\theta)}H3)$

## FIG. 37

46; TRANSMISSION DIVERSITY DETERMINING UNIT

41; PHASE CONTROL DETERMINING UNIT

47; PILOT ARRANGEMENT INFORMATION GENERATING UNIT

## FIG. 38

START

COLLECT MCS INFORMATION FROM TERMINAL — m10

CHOOSE THE OPTIMUM TRANSMISSION DIVERSITY BASED ON MCS — m11

FIG. 39

FREQUENCY

FOR MEASUREMENT OF
MULTI-USER DIVERSITY
(NO PHASE CONTROL)

FOR MEASUREMENT OF
MULTI-USER DIVERSITY
(WITH PHASE CONTROL)

FOR MEASUREMENT
OF FREQUENCY DIVERSITY

CHUNK

TIME

MEASURE AT THE BAND
OF ALLOCATED CHUNK

## FIG. 41

| | f1 | f2 | f3 | f4 |
|----|-----|-----|-----|-----|
| t1 | K1 | K2 | K3 | K4 |
| t2 | K5 | K6 | K7 | K8 |
| t3 | K9 | K10 | K11 | K12 |
| t4 | K13 | K14 | K15 | K16 |
| t5 | K17 | K18 | K19 | K20 |

TIME

FREQUENCY

## FIG. 42

TIME

FREQUENCY

| **INTERNATIONAL SEARCH REPORT** | International application No. |
|---|---|
| | PCT/JP2006/321647 |

A. CLASSIFICATION OF SUBJECT MATTER
*H04J11/00*(2006.01)i, *H04B7/06*(2006.01)i, *H04B7/10*(2006.01)i, *H04B7/26*
(2006.01)i

According to International Patent Classification (IPC) or to both national classification and IPC

B. FIELDS SEARCHED

Minimum documentation searched (classification system followed by classification symbols)
H04J11/00, H04B7/06, H04B7/10, H04B7/26

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho  1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | Institute for Infocomm Research, NTT DoCoMo, Intra-Node B Macro Diversity based on Cyclic Delay Transmissions, 3GPP TSG RAN WG1 #42 on LTE R1-050795, 2005.09.02, Internet <URL: http://www.3gpp.org/ftp/tsg_ran/ WG1_RL1/TSGR1_42/Docs/R1-050795.zip> | 1,3,21<br>2,4,5<br>6-20 |
| X<br>Y | NTT DoCoMo, Inc., Downlink Multiple Access Scheme for Evolved UTRA, 3GPP TSG RAN WG Meeting #40bis R1-050249, 2005.04.08, pp.1,23-36, Internet <URL:http://www.3gpp.org/ftp/ tsg_ran/WG1_RL1/TSGR1_40bis/Docs/R1-050249.zip> | 10<br>2,4,5 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>11 January, 2007 (11.01.07) | Date of mailing of the international search report<br>23 January, 2007 (23.01.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2006/321647 |

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | Samsung, Further Details on Adaptive Cyclic Delay Diversity Scheme, 3GPP TSG RAN WG Meeting #42bis R1-051046, 2005.10.14, Internet <URL:http://www.3gpp.org/ftp/tsg_ran/WG1_RL1/ TSGR1_42bis/Docs/R1-051046.zip> | 10<br>2,4,5 |
| X<br>Y | Samsung Electronics Co. Ltd., Enhanced Frequency Diversity and Scheduling Performance in Evolved UTRA, 3GPP TSG RAN WG1 Meeting #42 R1-050888, 2005.09, Internet <URL:http://www.3gpp.org/ftp/tsg_ran/WG1_RL1/ TSGR1_42/Docs/R1-050888.zip> | 10<br>2,4,5 |

Form PCT/ISA/210 (continuation of second sheet) (April 2005)

## INTERNATIONAL SEARCH REPORT

| International application No. |
|---|
| PCT/JP2006/321647 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

When the invention of claim 1 is compared to the invention of claim 10, a technical feature common to them relates to "a radio transmitter having a transmission circuit unit for adding different delays to each n(n is an integer not smaller than 2) transmission antennas according to a signal concerning the transmission diversity". However, this feature is disclosed in document 1 (Institute for Inforcomm Research, NTT DoCoMo, Intra-Node B Macro Diversity based on Cyclic Delay Transmissions, 3GPP TSG RAN WG1 #42 on LTE R1-050795, 2005.09.02) and document 2 (Samsung, Further Details on Adaptive Cyclic Delay Diversity Scheme, 3GPP TSG RAN WG Meeting #42bis R1-051046, 2005.10.14) (Continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      the

☒ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

## INTERNATIONAL SEARCH REPORT

International application No.

PCT/JP2006/321647

Continuation of Box No.III of continuation of first sheet(2)

shown in the report on the result of the partial international search of ISA/206 reported previously.

Accordingly, "the radio transmitter having a transmission circuit unit for adding different delays to each n(n is an integer not smaller than 2) transmission antennas according to a signal concerning the transmission diversity" makes no contribution over the prior art and cannot be a special technical feature within the meaning of the aforementioned rule. Moreover, there exists no other same or corresponding feature which can be considered as a special technical feature between the inventions of claims 1-9, 21 and the inventions of claims 10-20.

Because of the reason given above, in the present application, there exists no same or corresponding feature which can be considered as a special technical feature between the inventions of claims 1-9, 21 and the inventions of claims 10-20. The two groups of inventions of the international application do not satisfy the requirement of unity of invention stipulated in PCT Rule 13.1.

Form PCT/ISA/210 (extra sheet) (April 2005)

**EP 1 944 892 A1**

**REFERENCES CITED IN THE DESCRIPTION**

**Patent documents cited in the description**

- JP 2005317267 A